(19) Europäisches Patentamt
European Patent Office
Office européen des brevets

(11) **EP 2 385 648 B1**

(12) **FASCICULE DE BREVET EUROPEEN**

(45) Date de publication et mention
de la délivrance du brevet:
**06.05.2015 Bulletin 2015/19**

(51) Int Cl.:
**H04L 1/18** *(2006.01)*    **H04L 25/02** *(2006.01)*
**H04L 5/00** *(2006.01)*

(21) Numéro de dépôt: **11163924.1**

(22) Date de dépôt: **27.04.2011**

(54) **Réseau coopératif à stratégie de demande de retransmission adaptative**

Kooperatives Netzwerk mit adaptiver Neuübertragungsanforderungs-Strategie

Cooperative network with adaptive retransmission request strategy

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.05.2010 FR 1053572**

(43) Date de publication de la demande:
**09.11.2011 Bulletin 2011/45**

(73) Titulaire: **Commissariat à l'Énergie Atomique
et aux Énergies Alternatives
75015 Paris (FR)**

(72) Inventeurs:
• **Ktenas, Dimitri
38600 FONTAINE (FR)**
• **Calvanese Strinati, Emilio
38000 GRENOBLE (FR)**

(74) Mandataire: **Augarde, Eric
Brevalex
56, boulevard de l'Embouchure, Bât. B
B.P. 27519
F-31075 Toulouse Cedex 2 (FR)**

(56) Documents cités:
**EP-A1- 2 151 940        WO-A1-2008/153308
WO-A1-2010/034339**

• **AYANOGLU E: "Adaptive ARQ/FEC for multitone
transmission in wireless networks", GLOBAL
TELECOMMUNICATIONS CONFERENCE, 1995.
CONFERENCE RECORD. COMMUNI CATION
THEORY MINI-CONFERENCE, GLOBECOM '95.,
IEEE SINGAPORE 13-17 NOV. 1995, NEW YORK,
NY, USA,IEEE, US LNKD- DOI:10.1109/GLOCOM.
1995.502807, vol. 3, 13 novembre 1995
(1995-11-13), pages 2278-2283, XP010164657,
ISBN: 978-0-7803-2509-8**
• **GIUSEPPE CAIRE ET AL: "Information Theoretic
Foundations of Adaptive Coded Modulation",
PROCEEDINGS OF THE IEEE, IEEE. NEW YORK,
US, vol. 95, no. 12, 1 December 2007 (2007-12-01),
pages 2274-2298, XP011197264, ISSN: 0018-9219,
DOI: 10.1109/JPROC.2007.904444**

**Description**

**DOMAINE TECHNIQUE**

La présente invention concerne de manière générale les systèmes de communication de type coopératif. Elle peut notamment s'appliquer dans les systèmes de type OFDMA (*Orthogonal Frequency Division Multiple Access*) par exemple dans les systèmes WiMAX ou 3GPP/LTE.

**ÉTAT DE LA TECHNIQUE ANTÉRIEURE**

Les systèmes de communication sans fil de type coopératif sont connus pour offrir une couverture plus importante et une moindre susceptibilité aux évanouissements (*fading*) que les systèmes cellulaires classiques. On trouvera par exemple une description des systèmes sans fil de type coopératif dans l'article de J.N Laneman et G.W. Wornell intitulé « Exploiting distributed spatial diversity in wireless networks » publié en Octobre 2000 dans Proc. Allerton Conf. on Comm., Contr. and Computing.

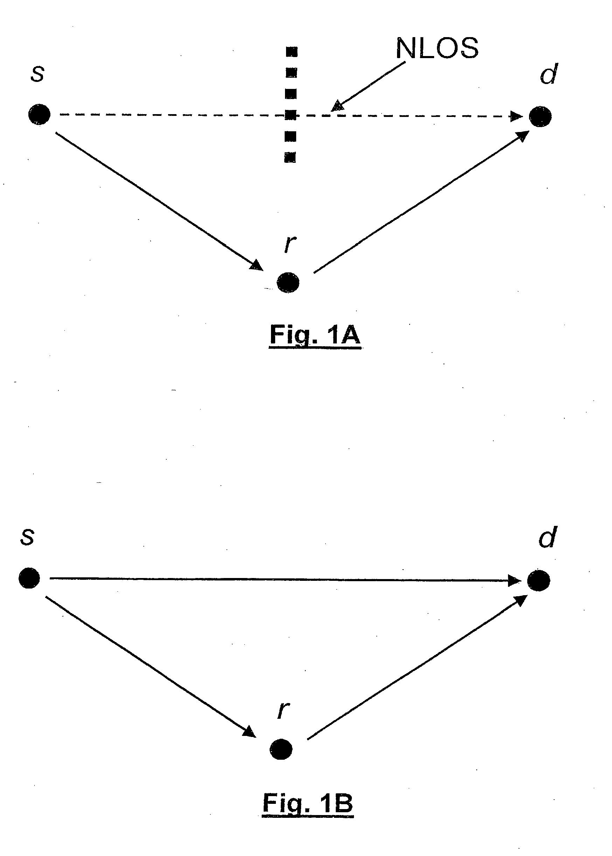

La Fig. 1A représente schématiquement un premier type de stratégie de coopération dans un tel système. Le terminal source *s* transmet un flux de données à un terminal relais *r*. Le terminal relais reçoit le flux de données et le retransmet, après l'avoir éventuellement décodé et recodé, au terminal destinataire *s*. Cette stratégie permet au terminal source, par exemple une station de base d'un réseau cellulaire, d'atteindre le terminal *d* lorsque le trajet *s-d* n'est pas en ligne directe (NLOS), à cause de la présence d'un obstacle entre *s* et *d* , ou si la distance entre *s* et *d* excède la portée de la station de base. Le canal *s-r- d* résultant de la concaténation des canaux *s-r* et *r-d* est dénommé canal relayé.

La Fig. 1B représente schématiquement une seconde stratégie de coopération dans un tel système. Le terminal source *s* transmet un flux de données à un terminal destinataire *d*. Le terminal relais *r* reçoit également le flux de données issu de *s* et le relaie au terminal destinataire *d*. Le terminal destinataire *d* reçoit ainsi un flux de données via le canal direct *s-d* et via le canal relayé *s-r-d* . Il peut utiliser le flux direct issu de *s* ou le flux relayé issu de *r*, voire combiner les deux pour profiter de la diversité spatiale, comme nous le verrons plus loin.

En outre, les deux stratégies de coopération exposées plus haut peuvent faire appel à un seul relais ou à une pluralité de relais. Dans le cas le plus général, le réseau coopératif peut être considéré comme un graphe comportant un noeud source (constitué par le terminal source), un noeud destinataire ou *sink* (constitué par le terminal destinataire) et une pluralité de noeuds intermédiaires jouant le rôle de terminaux relais.

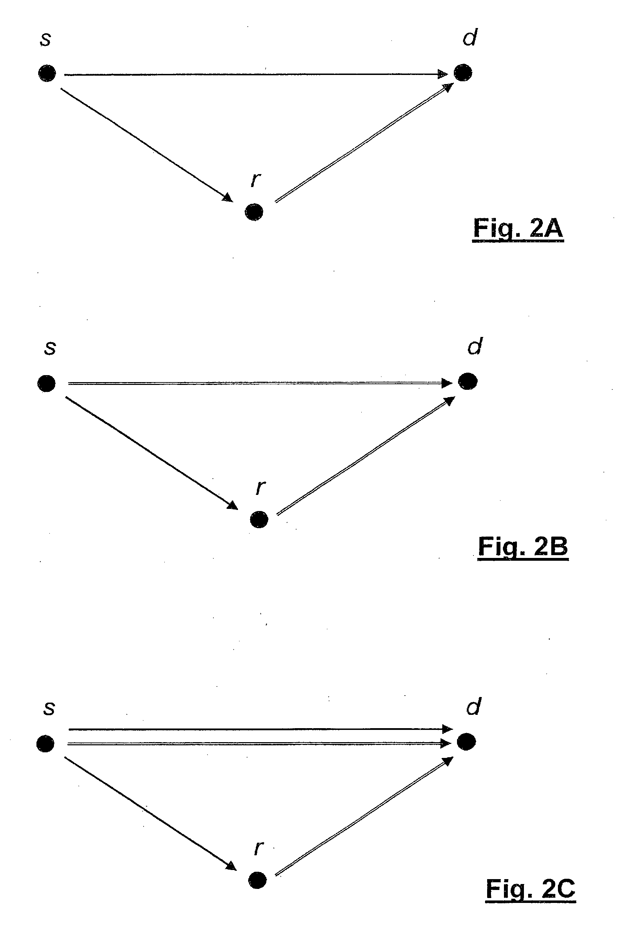

Lorsqu'un flux de données est relayé en une ou plusieurs fois entre un terminal source et un terminal destinataire, en d'autres termes s'il existe un chemin orienté dans le graphe entre le noeud source et le noeud destinataire, passant par au moins un noeud intermédiaire, chaque arête constitutive de ce chemin est appelé bond (*hop*). Ainsi, dans le cas simple de la Fig. 1A, la liaison entre *s* et *d* est dite à « deux bonds » (*double hop link*) et de manière plus générale à bonds multiples (*multiple hop link*). Dans le cas de la Fig. 2B, on notera la présence à la fois d'une liaison à un seul bond *s-d (single hop link)* et d'une liaison à bonds multiples *s-r-d* .

Une liaison à bonds multiples fait appel à une pluralité de canaux de transmission successifs. Le canal résultant est alors appelé canal multi-bond. Ainsi le canal de transmission relayé *s-r-d* constitué des canaux *s-r* et *r-d* est un canal à 2 bonds.

Dans tous les cas, un terminal relais peut se contenter de retransmettre, après amplification, le signal qu'il reçoit du terminal source (protocole dit AF pour *Amplify and Forward*) ou bien décoder préalablement le signal reçu avant de le réémettre (protocole dit DF pour *Decode and Forward*) sous une forme recodée. Lorsque le code utilisé pour le recodage est le même que celui utilisé par le décodage, on parle de protocole DF à codage contraint (ou de code à répétition). Bien entendu, le codage est dit non contraint dans le cas inverse.

Les systèmes de communication de type OFDMA sont par ailleurs bien connus de l'état de la technique, par exemple les systèmes WiMax (802.16) ou 3GP/LTE (3GPP *Long Term Evolution*)*.* Dans un tel système, différents utilisateurs se voient attribuer des intervalles distincts de sous-porteuses (ou *frequency chumks*) d'un multiplex OFDM. L' allocation d'un intervalle de sous-porteuses à un utilisateur se fait généralement de manière dynamique pour chaque intervalle de transmission. Ainsi, d'un intervalle de transmission à l'autre, une station de base transmettant des flux de données à plusieurs terminaux pourra utiliser une allocation différente d'intervalles de sous-porteuses pour transmettre ces flux. Lors d'un intervalle de transmission, l'émetteur (par exemple une station de base) transmet une série de symboles OFDM transportant les flux à destination des différents utilisateurs.

L'utilisation d'une stratégie coopérative dans un réseau OFDMA est également connue de l'état de la technique. Ainsi, le projet de normalisation IEEE 802.16j propose d'appliquer une stratégie coopérative à un réseau cellulaire de type WiMax.

Différents protocoles de transmission coopérative peuvent être envisagés. Afin d'en simplifier la présentation, nous nous limiterons au cas simple d'un réseau comprenant un terminal source, un terminal relais et un terminal destinataire. Tous ces protocoles ont pour point commun de mettre en oeuvre deux intervalles de transmission consécutifs, un premier intervalle pendant lequel le terminal source émet et le terminal relais reçoit, et un deuxième intervalle pendant lequel le terminal relais retransmet et le terminal destinataire reçoit. Ils diffèrent cependant en ce que la transmission directe entre le terminal source et le terminal destinataire peut avoir lieu soit pendant le premier intervalle de transmission, soit pendant le second, soit encore pendant les deux.

Les Fig. 2A à 2C représentent trois protocoles de transmission. On a représenté respectivement par des traits simples et des traits doubles les transmissions ayant lieu pendant les premier et second intervalles de transmission.

Selon un premier protocole, représenté en Fig. 2A, le terminal source transmet aux terminaux relais et destinataire, pendant un premier intervalle de transmission, et le terminal relais retransmet au terminal destinataire pendant un second intervalle de transmission.

Selon un second protocole, représenté en Fig. 2B, le terminal source transmet au terminal relais pendant le premier intervalle de transmission. Le terminal source transmet et le terminal relais retransmet au terminal destinataire pendant le second intervalle de transmission.

Enfin, selon un troisième protocole représenté en Fig. 2C, le terminal source transmet aux terminaux relais et destinataire pendant le premier intervalle de transmission. Le terminal source transmet et le terminal relais retransmet au terminal destinataire pendant le second intervalle de transmission.

Le premier protocole est qualifié de coopération orthogonale au sens où les signaux reçus par le destinataire sont séparés par des intervalles de transmission distincts. De manière plus générale, si le terminal destinataire reçoit des signaux d'une source et d'un ou plusieurs relais, à l'aide de ressources orthogonales (fréquences, intervalles de sous-porteuses, codes, intervalles de transmission), la coopération sera encore orthogonale. Le terminal destinataire peut combiner ou non les signaux reçu et relayé sur les ressources orthogonales.

Par combinaison, on entend ici, soit une simple moyenne des valeurs souples des données reçues sur les deux ressources orthogonales (*Diversity Combining*) dans le cas d'un protocole DF avec code à répétition, soit un procédé de combinaison de codes, dans le cas d'un protocole DF non contraint. La combinaison de codes peut être une simple concaténation de codes (par exemple mot de code transmis sur différentes ressources), ou utiliser un turbodécodage (les terminaux source et relais jouant le rôle de codeurs élémentaires d'un turbocodeur spatialement distribué).

A l'inverse, pour les protocoles de transmission des Figs. 2B et 2C, la coopération sera qualifiée de non orthogonale si les mêmes ressources de transmission, ici le même intervalle de transmission et, dans le cadre d'un système OFDMA, le même intervalle de sous-porteuses, sont utilisées par les terminaux relais et source. Ainsi, le terminal destinataire reçoit, sur une même ressource de transmission, le signal direct issu du terminal source et le signal relayé par le terminal relais, sous une forme combinée.

On connaît par ailleurs les protocoles de demande de retransmission ARQ (*Automatic Repeat reQuest*) et HARQ (*Hybrid ARQ*) dans les systèmes de télécommunication point à point. Dans un tel système, les paquets de bits sont codés par un émetteur à l'aide d'un codage dit FEC (*Forward Error* Correction) pouvant prendre la forme d'un code de détection d'erreur (CRC) ou de correction d'erreur (ECC), avant d'être modulés et émis. Si le récepteur détecte dans un paquet la présence d'une erreur qu'il ne peut corriger, il transmet un acquittement négatif (NACK) à l'émetteur. La combinaison d'un codage FEC et d'un protocole de retransmission ARQ est connue dans la littérature sous l'acronyme HARQ (*Hybrid ARQ*). Il existe actuellement plusieurs versions de protocole HARQ.

Dans la version la plus simple, dénommée HARQ Type I, lorsqu'une erreur ne peut être corrigée dans un paquet, une requête de retransmission du paquet erroné est envoyée à l'émetteur et une seconde tentative de transmission a lieu. En pratique le paquet erroné n'est pas supprimé mais est stocké dans un buffer de réception pour y être combiné (*Chase combining*) avec le bloc reçu à la seconde tentative. Le résultat de la combinaison est ensuite soumis au décodeur.

Une seconde version de protocole HARQ, dénommée HARQ Type II ou IR HARQ (*Incremental Redundancy HARQ*) permet de réduire la taille des paquets retransmis. Selon cette version, lors de la première transmission du paquet, le code est poinçonné de telle sorte que peu de bits de redondance sont transmis. Si le paquet reçu lors de la première transmission se révèle erroné et ne peut être corrigé à l'aide des bits de redondance disponibles, des bits de redondance supplémentaires, éliminés lors du poinçonnage, sont transmis en réponse à la première requête de retransmission. Le processus peut se répéter, les bits de redondance étant transmis de manière incrémentale, au fur et à mesure des demandes de retransmission, tant que le bloc erroné ne peut être corrigé.

Les protocoles de demande de retransmission ARQ et HARQ conventionnels ne peuvent s'appliquer directement aux réseaux coopératifs puisqu'ils ne prennent pas en compte la présence de relais.

Différents protocoles de demande de retransmission ont été récemment proposés pour les réseaux coopératifs. Par exemple, la demande internationale WO2008/024158 décrit un protocole HARQ assisté par relais. Selon ce protocole, si le terminal destinataire n'arrive pas à décoder les données reçues du terminal source lors d'un premier intervalle de transmission, le terminal source retransmet les données lors d'un second intervalle de transmission. En parallèle, si le terminal relais a pu décoder les données reçues lors du premier intervalle de transmission, celui-ci retransmet les données au terminal destinataire pendant le second intervalle de transmission. A défaut, le terminal relais reste silencieux pendant ce second intervalle. On comprend ainsi que le relais, et donc la diversité spatiale et/ou la diversité de codage qu'il apporte n'est prise en compte que si la première transmission a échoué.

Un second protocole de demande de retransmission pour réseau coopératif a été proposé dans l'article de B. Zhao et al. intitulé « A Generalization of Hybrid-ARQ » publié dans IEEE Journal on Selected Areas in Comm., Vol. 23, N° 1, Janvier 2005, pages 7-18. Selon ce protocole, on considère l'ensemble $D(s)$ des noeuds du réseau ayant une connaissance dépourvue d'erreurs du paquet de données, au début de l'intervalle de transmission s. Ainsi, $D(1)$ est réduit au terminal source et $D(2)$ comprend, outre le terminal source, le ou les relais ayant réussi à décoder les données reçues lors du premier intervalle de transmission. Lors du second intervalle de transmission ($s=2$), on sélectionne parmi les relais appartenant à $D(2)$ celui qui est le plus proche du terminal destinataire ou encore celui dont la liaison avec ce dernier présente le rapport signal sur bruit instantané le plus élevé. Le noeud sélectionné assure la retransmission lors du second intervalle de transmission.

Les protocoles de demande de retransmission proposés présentent toutefois d'importantes limitations.

Ainsi, le protocole décrit dans WO2008/024158 fait systématiquement appel à une retransmission des données par le terminal relais alors que la liaison entre celui-ci et le terminal destinataire peut être dégradée sur la ressource de transmission utilisée (*frequency chunk* dans un système OFDMA). Cette transmission est alors bien souvent inutile.

Le protocole décrit dans l'article précité sélectionne le noeud le plus approprié pour la retransmission vers le terminal destinataire, en fonction d'un critère de distance ou de rapport signal sur bruit. Toutefois, si la liaison entre le terminal relais sélectionné et le terminal destinataire est dégradée sur la ressource de transmission utilisée, cette retransmission sera là encore probablement inutile.

Le but de la présente invention est de proposer un protocole de retransmission dans un réseau coopératif qui réduise considérablement la probabilité d'échec de retransmission, autrement dit la probabilité que le décodage des données reçues par le destinataire conduise à des valeurs erronées. De manière équivalente, le but de l'invention est de réduire le nombre de retransmissions nécessaires pour obtenir un décodage sans erreur au niveau du terminal destinataire.

WO 2008/153308-A1 décrit une méthode où la ressource de retransmission est différente que la précédente lorsque le nombre de retransmissions erronées dépasse un certain seuil.

## EXPOSÉ DE L'INVENTION

La présente invention est définie par une méthode de retransmission dans un réseau coopératif comprenant une pluralité de noeuds dont un terminal source, un terminal destinataire et au moins un terminal relais, un paquet de données étant transmis par le terminal source à destination du terminal destinataire via au moins ledit terminal relais, dans laquelle on détermine si le paquet de données peut être décodé sans erreur par un premier noeud distinct du terminal source et, dans la négative, on détermine si au moins un canal de transmission acheminant ledit paquet entre au moins un

second noeud et ledit premier noeud est en situation de coupure, et :

si ledit canal est en situation de coupure, ledit second noeud transmet une nouvelle fois le paquet en utilisant une ressource de transmission différente de celle utilisée par ce noeud lors de sa précédente transmission dudit paquet ; et

si ledit canal n'est pas en situation de coupure, ledit second noeud transmet une nouvelle fois le paquet en utilisant une même ressource de transmission que celle utilisée par ce même noeud lors de sa précédente transmission dudit paquet.

Selon une première variante, le premier noeud étant le terminal destinataire, le second noeud étant le terminal source, et ledit terminal relais utilisant un protocole AF, on détermine si le terminal destinataire peut décoder le paquet de données sans erreur, et dans la négative, on détermine si le canal de transmission entre le terminal source et le terminal destinataire, relayé par le terminal relais est en situation de coupure et,

si ledit canal est en situation de coupure, les terminaux source et relais utilisent pour la nouvelle transmission dudit paquet sur le canal relayé, des ressources de transmission différentes de celles utilisées pour la transmission précédente dudit paquet sur ce canal ; et

dans le cas inverse, les terminaux source et relais utilisent pour la nouvelle transmission dudit paquet sur le canal relayé, les mêmes ressources de transmission que celles utilisées pour la transmission précédente dudit paquet sur ce canal.

Selon une seconde variante, le premier noeud étant le terminal destinataire, le second noeud étant le terminal source, et ledit terminal relais utilisant un protocole AF, on détermine si le terminal destinataire peut décoder le paquet de données sans erreur, et dans la négative, on détermine si le canal de transmission entre le terminal source et le terminal destinataire, relayé par le terminal relais est en situation de coupure, et en cas de coupure du canal relayé (*s-r-d*), on vérifie à l'aide d'une démodulation partielle des données reçues par le terminal relais si le canal de transmission

(*s-r*) entre le terminal source et le terminal relais est lui-même en situation de coupure, et

si le canal relayé (*s - r - d*) n' est pas en situation de coupure, les terminaux source et relais utilisent pour la nouvelle transmission dudit paquet sur le canal relayé, les mêmes ressources de transmission que celles utilisées pour la transmission précédente dudit paquet sur ce canal;

si le canal relayé (*s-r- d*) est en situation de coupure mais que le canal (*s-r*) entre le terminal source et le terminal relais ne l'est pas, le terminal source utilise une même ressource de transmission que celle utilisée pour la transmission dudit paquet sur le canal (*s-r*) entre le terminal source et le terminal relais lors de la transmission précédente, et le terminal relais utilise une ressource de transmission différente de celle utilisée pour la transmission dudit paquet sur le canal (*r-d*) entre le terminal relais et le terminal destinataire lors de la transmission précédente;

si le canal relayé (**s-r-d**) est en situation de coupure et que le canal (*s - r*) entre le terminal source et le terminal relais l'est également, le terminal source utilise une ressource de transmission différente de celle utilisée pour la transmission dudit paquet sur le canal (*s-r*) entre le terminal source et le terminal relais lors de la transmission précédente, et le terminal relais utilise la même ressource de transmission que celle utilisée pour la transmission dudit paquet sur le canal (*r-d*) entre le terminal relais et le terminal destinataire lors de la transmission précédente.

Selon une troisième variante, le premier noeud étant le terminal destinataire, le second noeud étant le terminal relais, et ledit terminal relais utilisant un protocole DF, on détermine si le terminal destinataire peut décoder le paquet de données sans erreur, et dans la négative, on détermine si le canal de transmission (*r-d*) entre le terminal relais et le terminal destinataire est en situation de coupure, et,

si ce canal est en situation de coupure, le terminal relais utilise une ressource de transmission différente de celle utilisée pour la transmission dudit paquet sur le canal (*r-d*) entre le terminal relais et le terminal destinataire lors de la transmission précédente,

dans le cas inverse, le terminal relais utilise la même ressource de transmission utilisée pour la transmission dudit paquet sur le canal (*r-d*) entre le terminal relais et le terminal destinataire lors de la transmission précédente.

Dans ce cas, préalablement à la transmission dudit paquet par le terminal relais, on détermine avantageusement si le terminal relais peut décoder le paquet de données sans erreur, et, dans la négative, on détermine si le canal de transmission (*s-r*) entre le terminal source et le terminal relais est en situation de coupure et,

si ce canal est en situation de coupure, le terminal source utilise une ressource de transmission différente de celle utilisée pour la transmission dudit paquet sur le canal (*s - r*) entre le terminal source et le terminal relais lors de la transmission précédente,

et, à l'inverse, le terminal source utilise la même ressource de transmission utilisée pour la transmission dudit paquet sur le canal (*s-r*) entre le terminal source et le terminal relais lors de la transmission précédente.

Selon une quatrième variante, le terminal source transmet d'une part ledit paquet sur un canal direct (*s-d*) et d'autre part sur un canal relayé (*s-r-d*) au terminal destinataire, le terminal relais opérant selon un protocole DF et utilisant le même code ou un code différent de celui utilisé par le terminal source pour coder le paquet préalablement à sa transmission.

Dans ce cas, lorsque le premier noeud est le terminal destinataire et le second noeud est le terminal relais, on détermine si le terminal destinataire peut décoder sans erreur le paquet reçu sur le canal relayé, et, dans la négative, on détermine si le canal de transmission (*r-d*) entre le terminal relais et le terminal destinataire est en situation de coupure, et,

si ce canal est en situation de coupure, le terminal relais transmet une nouvelle fois ledit paquet sur une ressource de transmission différente de celle utilisée pour la transmission dudit paquet sur le canal (*r-d*) entre le terminal relais et le terminal destinataire lors de la transmission précédente,

dans le cas inverse, le terminal relais transmet une nouvelle fois ledit paquet sur la même ressource de transmission utilisée pour la transmission dudit paquet sur le canal (*r-d*) entre le terminal relais et le terminal destinataire lors de la transmission précédente.

Avant de déterminer si le terminal destinataire peut décoder sans erreur le paquet reçu sur le canal relayé, on détermine avantageusement d'abord si le terminal destinataire peut décoder sans erreur le paquet reçu sur le canal direct, et, dans la négative, on détermine si le terminal relais peut alors décoder le paquet sans erreur, et, si ce n'est toujours pas le cas, on vérifie si au moins le canal direct (*s-d*) et le canal (*s-r*) entre le terminal source et le terminal relais sont en situation de coupure, et

en cas de coupure de l'un ou l'autre canal, le terminal source transmet une nouvelle fois ledit paquet sur les canaux direct et relayé, en utilisant une ressource de transmission différente de celle utilisée pour la transmission précédente dudit paquet,

en absence de coupure de ces deux canaux, le terminal source transmet une nouvelle fois ledit paquet sur les canaux direct et relayé, en utilisant la même ressource de transmission utilisée pour la transmission précédente dudit paquet.

Alternativement, si le décodage dudit paquet est erroné au niveau du terminal destinataire mais dépourvu d'erreur au niveau du terminal relais, on compare l'information mutuelle instantanée sur le canal (*r-d*) entre le terminal relais et le terminal destinataire, et celle sur le canal direct (*s-d*), et

si la première est supérieure à la seconde : le terminal relais transmet ledit paquet au terminal destinataire ;
dans le cas inverse :

on vérifie si au moins le canal direct (*s-d*) ou le canal (*s-r*) entre le terminal source et le terminal relais est en situation de coupure, et
en cas de coupure de l'un ou l'autre canal, le terminal source transmet une nouvelle fois ledit paquet sur les canaux direct et relayé, en utilisant une ressource de transmission différente de celle utilisée pour la transmission précédente dudit paquet,
en absence de coupure de ces deux canaux, le terminal source transmet une nouvelle fois ledit paquet sur les canaux direct et relayé, en utilisant la même ressource de transmission utilisée pour la transmission précédente dudit paquet.

Selon une cinquième variante, le terminal source transmet d'une part ledit paquet sur un canal direct (*s-d*) et d'autre part sur un canal relayé (*s-r-d*) au terminal destinataire, le terminal relais utilisant un code différent de celui utilisé par le terminal source pour coder le paquet préalablement à sa transmission, le terminal destinataire réalisant une combinaison des données reçues via le canal direct et via le canal relayé.
Ladite combinaison est réalisée par concaténation des données reçues via le canal direct et celles reçues via le canal relayé.
Alternativement, le terminal source transmet d'une part ledit paquet sur un canal direct (*s-d*) et d'autre part sur un canal relayé (*s-r-d*) au terminal destinataire, le terminal relais utilisant le même code que celui utilisé par le terminal source pour coder le paquet préalablement à sa transmission, le terminal destinataire réalisant une combinaison des données reçues via le canal direct et via le canal relayé. Ladite combinaison peut être réalisée par sommation des valeurs souples des données reçues via le canal direct et des valeurs souples des données reçues via le canal relayé.
Dans les deux cas précédents, le terminal destinataire peut effectuer un décodage dudit paquet en utilisant le paquet codé reçu du terminal source, d'une part, et le paquet reçu du terminal relais, d'autre part et, dans le cas où ledit paquet ne peut être décodé sans erreur, on détermine si le canal composite (**sd** & **rd**) résultant de la combinaison du canal direct (*s-d*) et du canal entre le terminal relais et le terminal destinataire (*r-d*) est en situation de coupure, et
en absence de coupure dudit canal composite, le terminal source transmet une nouvelle fois ledit paquet sur les canaux direct et relayé, en utilisant la même ressource de transmission utilisée pour la transmission précédente dudit paquet,
et le terminal relais retransmet ledit paquet sur la même ressource de transmission (**PRB₂**) utilisée pour la transmission précédente ;
en cas de coupure du canal composite, on compare l'information mutuelle instantanée sur le canal (*r-d*) entre le terminal relais et le terminal destinataire et celle sur le canal direct (*s-d*), et,
si la première est supérieure à la seconde :

le terminal source transmet une nouvelle fois ledit paquet en utilisant une ressource de transmission différente de celle utilisée pour la transmission précédente dudit paquet,
et dans le cas inverse :

le terminal relais transmet une nouvelle fois ledit paquet en utilisant une ressource de transmission différente de celle utilisée pour la transmission précédente dudit paquet.

Enfin, la méthode exposée ci-dessus peut être mise en oeuvre dans le cas où le réseau coopératif est un système de télécommunication OFDMA et les ressources de transmission sont constituées par des intervalles de sous-porteuses d'un multiplex OFDM ou des pluralités de tels intervalles.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

Les Figs. 1A et 1B représentent schématiquement deux stratégies de coopération dans un système de télécommunication de type coopératif ;
Les Figs. 2A à 2C représentent trois exemples de protocole de transmission dans un réseau coopératif ;
La Fig. 3 représente schématiquement un protocole de demande de retransmission dans un réseau coopératif avec relayage AF, selon un premier mode particulier de réalisation de l'invention ;
La Fig. 4 représente schématiquement une méthode de retransmission pour un réseau coopératif avec relayage DF, selon un second mode particulier de réalisation de l'invention ;

La Fig. 5 représente schématiquement une méthode de retransmission pour un réseau coopératif, selon un troisième mode de réalisation de l'invention ;

La Fig. 6 représente schématiquement une méthode de retransmission pour un réseau coopératif, avec relayage DF, selon un quatrième mode particulier de réalisation de l'invention ;

La Fig. 7A représente schématiquement une méthode de retransmission pour un réseau coopératif, avec relayage DF, selon un cinquième mode particulier de réalisation de l'invention ;

La Fig. 7B représente schématiquement une méthode de retransmission pour un réseau coopératif, avec relayage DF, selon une variante du cinquième mode particulier de réalisation de l'invention ;

La Fig. 8 représente schématiquement une méthode de retransmission pour un réseau coopératif, selon un mode général de réalisation de l'invention.

## EXPOSÉ DÉTAILLÉ DE MODES DE RÉALISATION PARTICULIERS

Nous considérerons dans la suite un système de télécommunication coopératif, encore dénommé réseau coopératif, comprenant un terminal source *s,* au moins un terminal relais *r,* et un terminal de destination *d.* L'expression « terminal source » doit être prise au sens large, la présente invention pouvant s'appliquer notamment au cas où une station de base transmet des données au terminal d'un utilisateur sur sa liaison descendante. De la même façon, l'expression « terminal de destination » doit être comprise au sens large, la présente invention pouvant s'appliquer notamment au cas où le terminal d'un utilisateur transmet des données à une station de base sur sa liaison montante. Dans les deux cas indiqués, les données sont relayées par le terminal relais, soit vers la station de base pour la liaison montante, soit vers le terminal de l'usager pour la liaison descendante. On entendra ici l'expression « terminal relais » au sens large, celle-ci pouvant couvrir aussi bien un terminal mobile qu'une station de base servant de relais.

Nous supposerons dans la suite que le système de télécommunication coopératif utilise de préférence, mais non nécessairement, des ressources de transmission fréquentielles. L'invention sera illustrée de manière non limitative par un système de type OFDMA. Dans un tel système, les ressources fréquentielles sont des intervalles de sous-porteuses d'un multiplex OFDM, chaque terminal pouvant se voir allouer une telle ressource pendant un intervalle de transmission (allocation dynamique ou *dynamic scheduling*) ou bien pendant une succession de tels intervalles (*semi-persistent scheduling*)*.*

Les canaux de transmission seront supposés être de type à évanouissements par bloc (*block fading channel*)*.* De manière générale, dans un canal à évanouissements par blocs, un message à transmettre, par exemple un mot de code, « voit » une pluralité d'instances de canal. Ces instances peuvent être temporelles et/ou fréquentielles selon que le canal est sélectif en temps ou en fréquence. Dans le cas particulier d'un système OFDMA, les instances de canal vues par un mot de code sont des intervalles de sous-porteuses (*frequency chunks*) subissant sensiblement le même évanouissement.

L'idée à la base de l'invention est de diagnostiquer parmi les liaisons participant de manière coopérative à une transmission entre un terminal source et un terminal destinataire, celles qui sont en situation de coupure, d'en déduire les noeuds qui participeront à l'étape de retransmission et, le cas échéant les ressources de transmission qu'ils pourront utiliser.

On rappelle que la capacité au sens de Shannon, exprimée comme moyenne de l'information mutuelle sur toutes les instances du canal, n'est pas une grandeur pertinente pour caractériser un canal non ergodique tel qu'un canal radio. On a alors recours aux notions de coupure et de probabilité de coupure introduites par E. Biglieri et al. dans son article intitulé « Fading channels : information-theoretic and communication aspects » publié dans IEEE Trans. on Information Theory, vol. 44, n° 6, Oct. 1998, pages 2619-2692.

De manière générale, le canal radio est caractérisé en un instant donné par l'information mutuelle instantanée de ce canal, le caractère instantané se référant à l'instance du canal que l'on considère.

Si l'on note *I* l'information mutuelle instantanée du canal, ce dernier sera en situation de coupure si $R > I$ où $R$ est le débit binaire de transmission. Dès lors que le canal est en situation de coupure, il ne sera pas possible de corriger un paquet de données ayant été transmis sur ce canal. Qui plus est, toute retransmission de ce paquet pendant le temps de cohérence du canal (c'est-à-dire pendant le laps de temps où l'on peut considérer que son coefficient d'atténuation a peu varié) sera également vouée à l'échec.

Nous rappellerons tout d'abord comment calculer l'information mutuelle instantanée d'un canal de transmission dans un système de télécommunication conventionnel OFDMA avant d'aborder le cas d'un système coopératif.

L'information mutuelle instantanée d'un canal de transmission OFDM entre un émetteur et un récepteur peut être obtenue au moyen de l'expression:

$$I_{inst} = \frac{1}{n_t n_c} \sum_{j=1}^{n_t} \sum_{i=1}^{n_c} I_{ij} \qquad\qquad (1)$$

où $I_{ij}$ est l'information mutuelle moyenne calculée pour la sous-porteuse $i$ pendant le $j^{\text{ème}}$ temps symbole OFDM de l'intervalle de transmission considéré, $n_t$ est le nombre de symboles OFDM pendant cet intervalle, et $n_c$ est le nombre de sous-porteuses du « chunk » utilisé par le canal.

Le comportement du canal sur une porteuse peut être considéré, au coefficient d'atténuation complexe près, comme étant de type BBAG (c'est-à-dire à Bruit Blanc Additif Gaussien).

On suppose que les symboles d'un paquet de données modulant les $n_c$ sous-porteuses appartiennent à un alphabet $Q$-aire. Le récepteur connaît au moyen d'un estimateur de canal les coefficients complexes d'atténuation $h_{ij}$ affectant les différentes sous-porteuses lors de la transmission du $j^{\text{ème}}$ temps symbole OFDM. Généralement, l'estimateur de canal effectue une estimation de certains coefficients complexes d'atténuation en différents instants de l'intervalle de transmission et pour différentes sous-porteuses, les autres coefficients étant déterminés par interpolation temporelle et/ou fréquentielle. L'estimateur de canal peut classiquement utiliser la détection de symboles pilotes distribués sur les sous-porteuses dans la trame de symboles OFDM de manière connue en soi.

La détection des symboles pilote permet par ailleurs d'obtenir une estimation de la variance de bruit $\sigma^2$. L'information mutuelle $I_{ij}$ s'exprime alors par :

$$I_{ij} = \log Q - \frac{1}{Q} \sum_{k=1}^{Q} E_z \left\{ \log \left( \sum_{q=1}^{Q} \exp \left[ -\frac{\left| h_{ij} a_k + z - h_{ij} a_q \right|^2 - |z|^2}{2\sigma^2} \right] \right) \right\}$$

$$(2)$$

où les $\alpha_q$=1,..,$Q$ sont les symboles de l'alphabet de modulation modulant les sous-porteuses pendant le temps symbole OFDM considéré, $z = N(0,\sigma^2)$ est la variable aléatoire décrivant le bruit sur chaque sous-porteuse et $E_z(.)$ est l'espérance sur les échantillons de bruit, le log étant ici pris en base 2.

L'information mutuelle instantanée peut alors s'exprimer sous la forme :

$$I_{inst} = \frac{1}{n_t n_c} \sum_{j=1}^{n_t} \sum_{i=1}^{n_c} I_{ij} \left( \frac{\left| h_{ij} \right|^2}{\sigma^2} \right) \qquad\qquad (3)$$

traduisant sa dépendance vis-à-vis du rapport signal sur bruit $\dfrac{\left| h_{ij} \right|^2}{\sigma^2}$ sur chaque sous-porteuse.

En pratique, pour chaque valeur discrète de la puissance de bruit $\sigma^2$ on calcule par simulation l'information mutuelle instantanée correspondante. Ces valeurs peuvent être alors directement stockées dans une table ou LUT (*Look Up Table*). Alternativement, on peut déduire de ces valeurs les coefficients d'une approximation polynomiale de $I_{ij}$ en fonction de $\sigma^2$ et stocker les coefficients ainsi calculés dans une table.

Dans un réseau coopératif l'expression (3) peut être utilisée pour calculer l'information mutuelle instantanée du canal entre un terminal source et un terminal relais, entre un terminal relais et un terminal destinataire, et du canal direct entre les terminaux source et destinataire. Si les données font l'objet de $K$ transmissions successives sur la même liaison, l'information mutuelle instantanée sur cette liaison aura la forme suivante :

$$I_{inst} = \frac{1}{n_t n_c} \sum_{j=1}^{n_t} \sum_{i=1}^{n_c} I_{ij} \left( \sum_{k=1}^{K} \frac{\left| h_{ij}^k \right|^2}{\sigma_k^2} \right)$$

$$(4)$$

où $h_{ij}^k$ est le coefficient d'atténuation sur le canal considéré relatif à la sous-porteuse $i$, au symbole OFDM $j$ lors de la *k*-ième transmission.

Si l'on considère maintenant le cas d'une stratégie de coopération du type de la Fig. 1B avec un protocole de retransmission AF, l'information mutuelle instantanée du canal relayé s'exprimera par :

$$I_{inst} = \frac{1}{n_t n_c} \sum_{j=1}^{n_t} \sum_{i=1}^{n_c} I_{ij} \left( \sum_{k=1}^{K} \frac{\left|h_{ij}^k(sd)\right|^2}{2\sigma_k^2} + \sum_{p=1}^{P} \frac{\left|h_{ij}^p(sr)\right|^2 \left|h_{ij}^p(rd)\right|^2}{2G\left|h_{ij}^p(rd)\right|^2 \sigma_p^2 + 2\sigma_p^2} \right) \tag{5}$$

où **K** est le nombre de transmissions des données sur le canal direct **s - d**, **P** est le nombre de retransmissions de ces données sur le canal **r-d**, **G** est le gain d'amplification du relais, $h_{ij}^k(sd)$, $h_{ij}^k(sr)$ et $h_{ij}^p(rd)$ sont respectivement les coefficients d'atténuation relatifs au canaux **s-d, s-r** et **r-d**, pour la *k*-ième et la *p*-ième transmission sur ces canaux, la sous-porteuse *i* et le symbole OFDM *j* de l'intervalle de transmission.

On notera que dans le cas particulier d'une stratégie de coopération du type de la Fig. 1A et toujours pour un protocole de retransmission AF, l'expression (5) se simplifie en :

$$I_{inst} = \frac{1}{n_t n_c} \sum_{j=1}^{n_t} \sum_{i=1}^{n_c} I_{ij} \left( \sum_{p=1}^{P} \frac{\left|h_{ij}^p(sr)\right|^2 \left|h_{ij}^p(rd)\right|^2}{G\left|h_{ij}^p(rd)\right|^2 \sigma_p^2 + \sigma_p^2} \right) \tag{6}$$

De manière similaire, si le protocole de retransmission est de type DF, l'information mutuelle instantanée sur le canal relayé pourra être évaluée comme suit :

$$I_{inst} = \frac{1}{n_t n_c} \sum_{j=1}^{n_t} \sum_{i=1}^{n_c} I_{ij} \left( \sum_{k=1}^{K} \frac{\left|h_{ij}^k(sd)\right|^2}{2\sigma_k^2} + \sum_{p=1}^{P} \frac{\left|h_{ij}^p(rd)\right|^2}{2\sigma_p^2} \right) \tag{7}$$

avec les mêmes conventions de notation que précédemment. Plus précisément, l'expression (7) est valable pour le cas où le terminal relais utilise un code identique à celui du terminal source (code contraint) et où l'on combine simplement au niveau de *d* les valeurs souples des données reçues de *r* et *s*. Cette configuration sera dénommée ci-après « DF à diversité spatiale » (DF *with diversity combining*) en raison de son analogie avec un système SIMO (*Single Input Multiple Output*) à deux antennes de réception (une première antenne recevant le signal directement de la source et une seconde antenne recevant le signal du relais) .

Si le protocole de retransmission est de type DF mais que les terminaux source et relais utilisent des codes différents, on peut effectuer un décodage au niveau du terminal destinataire à l'aide des données concaténées reçues de s d'une part et de celles reçues de *r* d'autre part, de manière connue en soi. Le cas échéant, il pourra être fait appel à un décodage itératif, par exemple un turbodécodage utilisant les données reçues de *s* et de *r*. On dénommera ci-après cette configuration « DF à diversité de codage » (DF *with code combining*) pour la distinguer de la configuration précédente.

L'information mutuelle instantanée du canal relayé peut alors s'exprimer dans ce cas par :

$$I_{inst} = \frac{1}{n_t n_c} \sum_{j=1}^{n_t} \sum_{i=1}^{n_c} I_{ij} \left( \sum_{k=1}^{K} \frac{\left|h_{ij}^k(sd)\right|^2}{2\sigma_k^2} \right) + \frac{1}{n_t n_c} \sum_{j=1}^{n_t} \sum_{i=1}^{n_c} I_{ij} \left( \sum_{p=1}^{P} \frac{\left|h_{ij}^p(rd)\right|^2}{2\sigma_p^2} \right) \tag{8}$$

avec les mêmes conventions de notation que précédemment.

On notera la présence d'un coefficient 2 au dénominateur des expressions (5), (7) et (8). Ce coefficient prend en compte le fait que la transmission se fait à puissance constante et que la puissance de transmission est équirépartie entre le terminal source et le terminal relais lorsque l'on effectue une recombinaison au niveau du terminal de destination. Bien entendu, si une autre distribution de puissance est envisagée, les expressions en question sont à modifier en conséquence. De manière générale, on comprendra que si le réseau coopératif fait intervenir *N* - 1 relais opérant en parallèle, le coefficient au dénominateur sera égal à *N* (si équirépartition de puissance).

Les expressions (7) à (8) peuvent se généraliser à un nombre quelconque de relais.

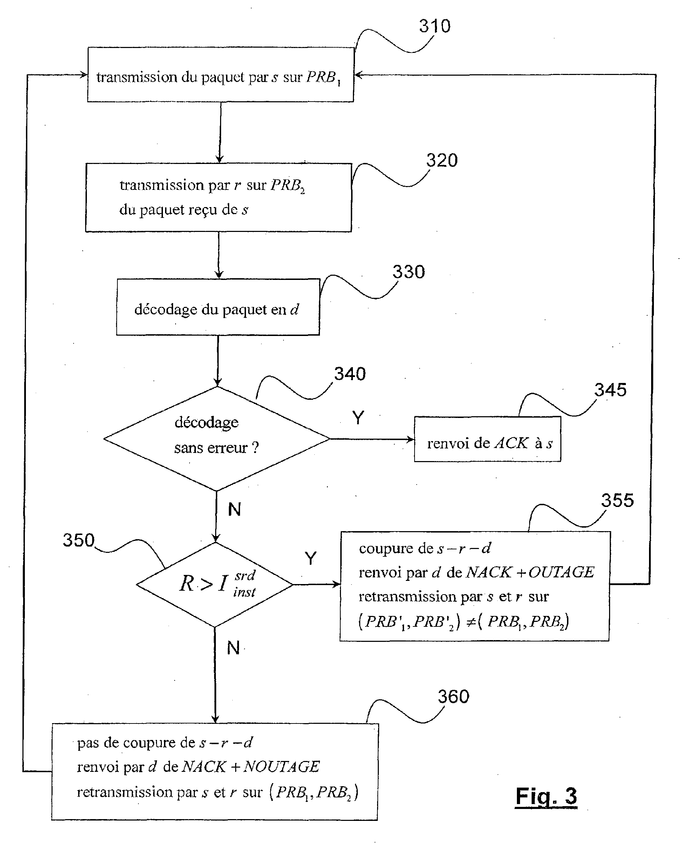

La Fig. 3 représente schématiquement une méthode de retransmission pour un réseau coopératif du type de la Fig. 1A, selon un premier mode particulier de réalisation de l'invention.

Par souci de simplification, mais sans préjudice de généralisation, nous supposerons d'abord que le réseau ne comprend qu'un seul relais et que ce dernier se contente d'amplifier et de réémettre les données qu'il reçoit du terminal source (configuration AF).

A l'étape 310, le terminal source transmet un paquet de données au terminal relais en utilisant une première ressource fréquentielle de transmission $PRB_1$, par exemple un intervalle de sous-porteuses (ou une pluralité de tels intervalles) si le système de télécommunication est de type OFDMA.

A l'étape 320, le signal reçu par le terminal relais est amplifié et retransmis par celui-ci sur une seconde ressource fréquentielle $PRB_2$.

A l'étape 330, le signal reçu est démodulé et décodé par le terminal destinataire. Si le paquet peut être décodé sans erreur, 340, un acquittement de bonne réception, **ACK,** est renvoyé vers le terminal source en 345. Dans la négative, c'est-à-dire si le code correcteur d'erreur ne peut corriger les erreurs affectant les données, on détermine à l'étape 350 si le débit binaire utilisé pour la transmission des données, **R,** est supérieur à l'information mutuelle instantanée du canal relayé s-r-d, notée $I_{inst}^{srd}$. Dans le cas d'un système OFDMA, Ind pourra être obtenu à l'aide de l'expression (6) (avec **K** = 1).

Si $R \leq I_{inst}^{srd}$, le canal relayé n'est pas en situation de coupure, une information l'indiquant, **NOUTAGE ,** est renvoyée vers le terminal source. Le terminal source effectue une nouvelle transmission des données en utilisant la ressource $PRB_1$ et le terminal relais la retransmet à l'aide de la ressource $PRB_2$ comme précédemment.

Si $R > I_{inst}^{srd}$, le canal relayé est en situation de coupure et une retransmission sur ce canal dans les mêmes conditions conduirait nécessairement à un nouvel échec. Un acquittement négatif, **NACK,** indiquant une erreur de décodage ainsi qu'une information indiquant la situation de coupure, **OUTAGE,** sont renvoyés vers le terminal source et le terminal relais (les signaux **NACK** et **OUTAGE** peuvent le cas échéant être eux-mêmes relayés par *r* au cas où *s* est hors de portée de *d*).

Différentes variantes sont envisageables à ce stade.

Selon une première variante, le terminal source recevant les informations **NACK** et **OUTAGE,** transmet à nouveau les données à l'aide d'une ressource $PRB'_1$ distincte de $PRB_1$. Le terminal relais retransmet au terminal destinataire les données qu'il a reçues sur $PRB'_1$, à l'aide d'une ressource $PRB'_2$ distincte de $PUB_2$. Le terminal *r* peut être averti directement de la situation de coupure grâce au signal **NOUTAGE** renvoyé par *d*. Alternativement, il peut recevoir un ordre de réallocation de ressources transmis par *s*. Alternativement encore, les terminaux *s* et *r* peuvent recevoir des ordres de réallocation de ressource d'un noeud dédié, gérant les situations de coupure pour tout ou partie du réseau.

Selon une seconde variante non représentée, le terminal relais effectue une démodulation partielle des données reçues, par exemple de symboles pilote contenus dans le paquet de données, afin de déterminer si le canal *s-r* est en situation de coupure en comparant l'information mutuelle instantanée $I_{inst}^{sr}$ avec le débit **R** utilisé. Pour le calcul de $I_{inst}^{sr}$ on pourra utiliser l'expression (4) (avec **K**=1) relative au canal **s - r**. Si $I_{inst}^{sr} > R$, une situation de coupure est diagnostiquée et une information l'indiquant, **OUTAGE_r** est renvoyée vers le terminal source. Dans le cas inverse, une information absence de coupure, **NOUTAGE_r** est renvoyée. Dans cette seconde variante, les ressources utilisées pour la retransmission par les terminaux source et relais sont déterminées comme suit : **OUTAGE** et **NOUTAGE_r : s** utilise $PRB'_1$ et *r* utilise $PRB_2$ **OUTAGE** et **OUTAGE_r :** s utilise $PRB_1$ et *r* utilise $PRB'_2$

En effet, dans le premier cas on attribuera la coupure du canal relayé à celle du canal **s-r** et dans le second cas à celle du canal **r- d.** La réallocation de ressources peut être contrôlée par le terminal source ou par un noeud de contrôle dédié.

Dans le mode de réalisation exposé ci-dessus, il est proposé de remédier à une situation de coupure du canal relayé en procédant à une réallocation des ressources du terminal source et/ou du terminal relais lors d'une retransmission des données. Avantageusement, lorsqu'une ressource $PRB_1$ ou $PRB_2$ est diagnostiquée comme étant en situation de coupure pour le canal **s - r** ou **r-d,** celle-ci ne sera pas réallouée pendant le temps de cohérence du canal.

Enfin, quelle que soit la variante envisagée, les données reçues lors de la première transmission et de la (ou les) retransmission(s) ultérieure(s) peuvent être combinées pour améliorer le signal sur bruit en réception et réduire le nombre de retransmissions nécessaires pour obtenir un décodage sans erreur. On pourra utiliser dans ce cas l'expression (4) (pour $I^{sr}$) ou (6) (pour $I^{srd}$) où $K$ représente le nombre de transmissions sur le canal concerné, pour estimer l'information mutuelle instantanée correspondante.

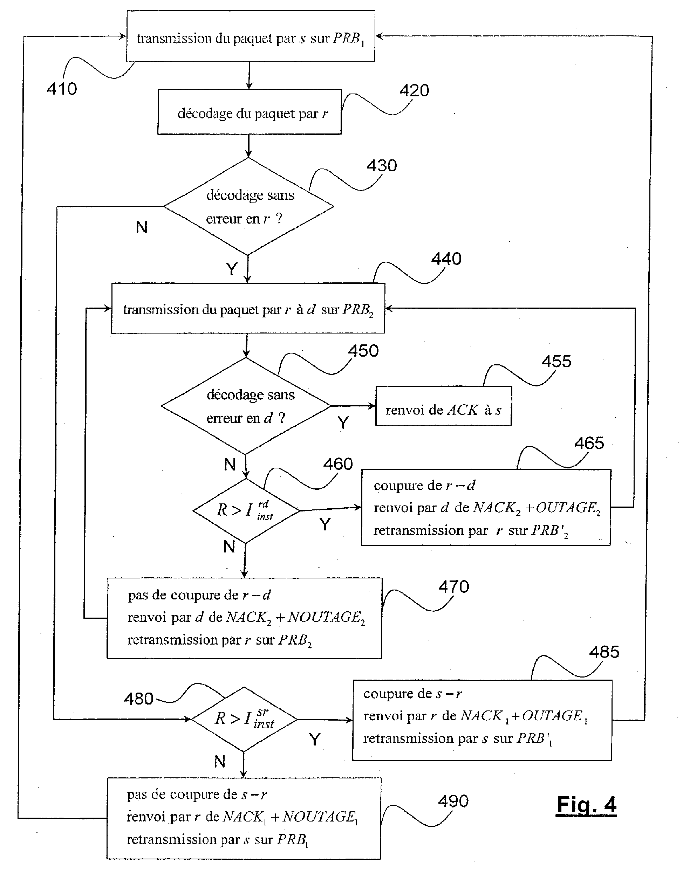

La Fig. 4 représente schématiquement une méthode de retransmission pour un réseau coopératif du type de la Fig. 1A, selon un second mode particulier de réalisation de l'invention. A la différence du mode de réalisation précédent, on supposera que le terminal relais décode les données reçues du terminal source, et les retransmet au terminal destinataire après les avoir recodées à l'aide d'un même code ou d'un code différent (configuration DF).

A l'inverse du premier mode de réalisation, le test de coupure progresse ici du terminal source vers le terminal destinataire.

Plus précisément, à l'étape 410, le terminal source transmet, sur la ressource fréquentielle $PRB_1$, un paquet de données au terminal relais.

A l'étape 420, on décode les données reçues au niveau du terminal relais et l'on détermine en 430 si le paquet peut être décodé sans erreur. Si ce n'est pas le cas, on passe à l'étape 480.

En revanche, si le terminal relais peut décoder les données sans erreur, il les transmet au terminal destinataire à l'aide d'une ressource fréquentielle $PRB_2$. Le code utilisé par le terminal relais peut être identique (*constrained coding*) ou non à celui utilisé par le terminal source.

On teste ensuite en 450 si le terminal destinataire a réussi à décoder les données reçues du terminal relais. Si c'est le cas, un message d'acquittement de bonne réception, *ACK,* est renvoyé vers le terminal source en 455. En revanche, si le paquet de données comprend des erreurs que le terminal destinataire ne peut corriger, on passe à l'étape 460.

En 460, on teste si le débit binaire utilisé pour la transmission entre *r* et *d* est supérieur à l'information mutuelle instantanée sur le canal *r-d,* autrement dit si $R > I_{inst}^{rd}$. On rappelle que si le système est de type OFDMA, $I_{inst}^{rd}$ pourra être calculé à partir de l'expression (4) (avec $K$ =1).

Si $R > I_{inst}^{rd}$, le canal *r-d* est diagnostiqué comme en état de coupure et le terminal destinataire renvoie au terminal relais, en 465, un acquittement négatif $NACK_2$ ainsi qu'une information de coupure $OUTAGE_2$. Le relais recevant ces informations retransmet le paquet de données au moyen d'une ressource temporelle $PRB'_2$ distincte de $PRB_2$. En effet, une transmission sur la même ressource lors de la seconde tentative serait très vraisemblablement vouée à l'échec. Cette seconde transmission est effectuée en retournant à l'étape 440 (et en remplaçant $PRB_2$ par $PRB'_2$).

Si, en revanche, $R \leq I_{inst}^{rd}$, le canal *r - d* n'est pas en état de coupure. Un acquittement négatif $NACK_2$ et une information d'absence de coupure $NOUTAGE_2$ sont renvoyés par le terminal destinataire au terminal relais. Ce dernier transmet alors à nouveau le paquet de données en 470, à l'aide de la même ressource que celle utilisée pour la première transmission, soit $PRB_1$.

A l'étape 480, c'est-à-dire si le relais n'a pas réussi à décoder les données reçues, on teste si le débit binaire utilisé pour la transmission entre *s* et *r* est supérieur à l'information mutuelle instantanée sur le canal *s - r,* autrement dit si $R > I_{inst}^{sr}$ (si le système est de type OFDMA, $I_{inst}^{sr}$ est calculé à l'aide de l'expression (4), avec $K$=1).

Si $R > I_{inst}^{sr}$, le canal *s - r* est diagnostiqué comme étant en état de coupure. Le terminal relais transmet alors au terminal source un acquittement négatif $NACK_1$ (indiquant que le paquet de données ne peut être décodé sans erreur) ainsi qu'une information de coupure $NOUTAGE_1,$ en 485. Une nouvelle ressource de transmission $PRB'_1$ est allouée au terminal source pour transmettre à nouveau de paquet de données à l'étape 410 ($PRB_1$ étant remplacé par $PRB'_1$).

A l'inverse, si $R \leq I_{inst}^{sr}$, le canal *s - r* n'est pas en situation de coupure. Une information indiquant l'absence de coupure, $NOUTAGE_1,$ ainsi qu'un acquittement négatif $NACK_1$ sont renvoyés par le terminal relais au terminal source. On retourne alors à l'étape 410 : le terminal source transmet à nouveau le paquet de données à l'aide de la même ressource fréquentielle que pour la première transmission, à savoir $PRB_1$.

Comme dans le premier mode de réalisation, différentes variantes peuvent être envisagées. En particulier, une ressource ($PRB_1$ ou $PRB_2$) en état de coupure peut ne pas être allouée au terminal concerné pendant un laps de temps correspondant au temps de cohérence du canal (*s-r* ou *r-d*). Enfin, les paquets reçus par le terminal relais ou par le terminal destinataire, lors de plusieurs transmissions consécutives des mêmes données, peuvent être combinés pour augmenter le rapport signal sur bruit, l'information mutuelle instantanée $I_{inst}^{sr}$ ou $I_{inst}^{rd}$ étant le cas échéant estimée en prenant en compte les **K** paquets reçus dans l'expression (4).

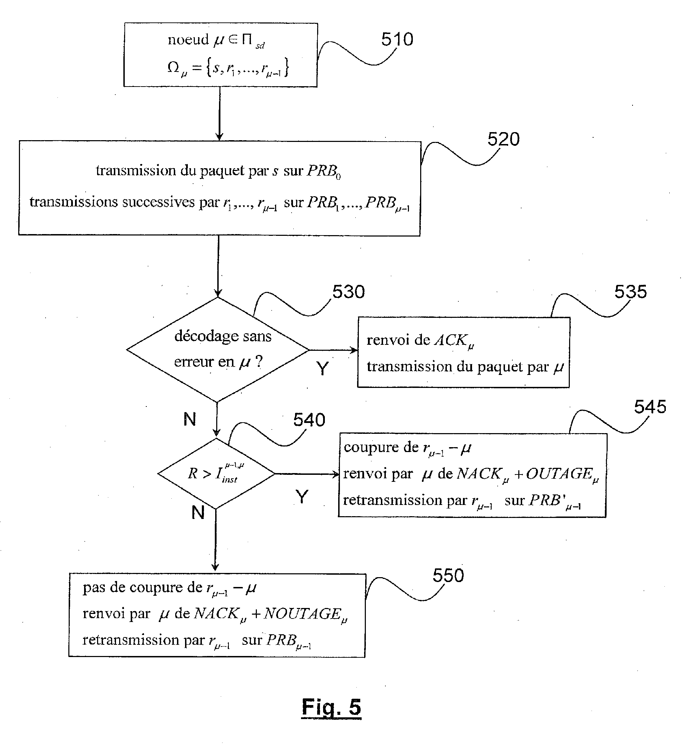

La Fig. 5 représente une méthode de retransmission dans un réseau coopératif du type de la Fig. 1A, selon un troisième mode de réalisation de l'invention.

On suppose ici que le réseau coopératif comprend un terminal source **s**, un terminal destinataire **d**, et un ensemble de terminaux relais, $\Lambda_r$, non vide. Le réseau coopératif peut être considéré de manière générale comme un graphe orienté dont les noeuds sont les terminaux, les arêtes sont les liaisons entre terminaux, le sens d'une arête étant donné par le sens de transmission.

Nous considérons la stratégie de coopération de la Fig. 1A, autrement dit il existe un chemin orienté $\Pi_{sd}$ dans le graphe, partant de s et aboutissant à d et passant par une suite ordonnée de relais {$r_1$, $r_2$,.., $r_M$} avec $M \geq 1$. On définit $\Omega$ = {**s**, $r_1$,...,$r_M$, **d**} comme la suite ordonnée des noeuds du chemin $\Pi_{sd}$ et $\Omega_\mu$={**s**, $r_1$,...,$r_{\mu-1}$} la suite ordonnée des prédécesseurs du noeud $\mu$, avec la même relation d'ordre que précédemment. On prendra conventionnellement $\Omega_1$ = {**s**} et $\Omega_{M+1}$ = $\Omega$ - {**d**}.

A l'étape 510, on considère un noeud $\mu$ du chemin $\Pi_{sd}$ distinct de **s**. Soit $\Omega_\mu$ la liste ordonnée associée à $\mu$.

En 520, le terminal source transmet un paquet de données à l'aide d'une ressource de transmission $PRB_0$. Le (ou les) relais $r_1$,...,$r_{\mu-1}$ transmette (nt) successivement ce paquet avec les ressources respectives $PRB_1$,...,$PRB_{\mu-1}$, selon un protocole AF ou DF. Dans le cas d'un protocole AF, on n'utilisera toutefois en règle générale qu'un seul relais.

On teste en 530 si le noeud $\mu$ a pu décoder sans erreur les données reçues. Si c'est le cas le noeud $\mu$ transmet un acquittement de réception $ACK_\mu$, et transmet à son tour le paquet de données en 535. On passe ensuite au noeud suivant.

En revanche en cas d'erreur, on détermine en 540 si le débit binaire de transmission **R** est supérieur à l'information mutuelle instantanée, $I_{inst}^{\mu-1,\mu}$, pour le canal $r_\mu$ - $r_{\mu-1}$. La retransmission n'est alors effectuée que par le noeud $r_{\mu-1}$ avec la même ressource de transmission, si le canal n'est pas une situation de coupure, et avec une ressource différente si ce canal l'est (étant bien entendu que si $\mu$ = $r_1$ le canal relayé se réduit à un canal simple).

On comprendra que le premier mode de réalisation est un cas particulier de ce troisième mode avec $\mu$=**d.** et que le second mode de réalisation en est également un cas particulier avec $\mu$=r.

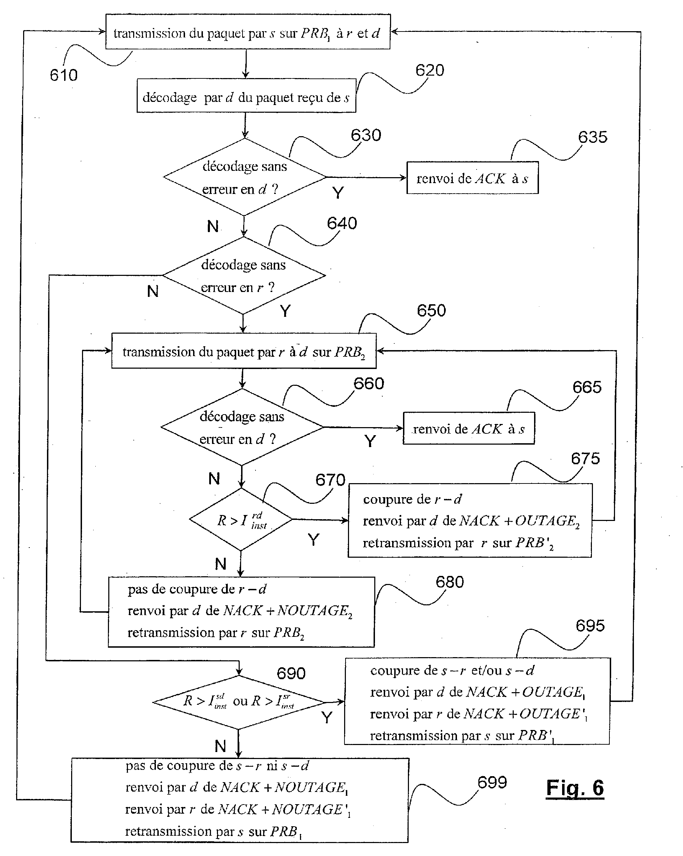

La Fig. 6 représente de manière schématique une méthode de retransmission pour un réseau coopératif, selon un quatrième mode particulier de réalisation de l'invention. A la différence des modes de réalisation précédents, la stratégie de coopération envisagée ici est du type de la Fig. 1B, autrement dit le terminal destinataire reçoit les données à la fois via le canal direct **s-d** et via un canal relayé **s-r-d,** mais il n'est pas envisagé une quelconque combinaison au niveau du terminal destinataires des données reçues via le canal direct et le canal relayé.

On supposera que le protocole de transmission utilisé est de type DF.

A l'étape 610, le terminal source transmet un paquet de données aux terminaux destinataire (canal direct) et relais (canal relayé), au moyen d'une ressource de transmission $PRB_1$.

A l'étape 620, le terminal destinataire décode les données reçues du terminal source et détermine en 630 si le paquet ainsi décodé est dépourvu d'erreur.

Dans l'affirmative, un signal d'acquittement de bonne réception **ACK** est renvoyé vers le terminal source, en 635. En revanche, en cas d'erreur, on passe à l'étape 640.

En 640, on détermine si le terminal relais a, lui même, réussi à décoder le paquet de données (pas d'erreur).

Si ce n'est pas le cas, on passe à l'étape 690, décrite plus loin. En revanche, si le décodage a réussi, le terminal relais transmet, en 650, ledit paquet de données au terminal destinataire, en utilisant le même code que le terminal source, ce au moyen d'une ressource de transmission $PRB_2$.

On teste ensuite en 660 si le terminal destinataire a réussi à décoder le paquet de données ainsi transmis par le terminal relais.

En cas de succès, un acquittement de bonne réception, **ACK** est renvoyé, en 665, par le terminal destinataire au terminal source.

En revanche, en cas d'échec, on détermine en 670, si le débit binaire utilisé pour la transmission est supérieur à l'information mutuelle instantanée sur le canal r-d, notée $I_{inst}^{rd}$.

$\mathrm{Si}$ $R > I_{inst}^{rd}$, le canal **r-d** est en situation de coupure et le terminal destinataire le signifie, en 675, au terminal relais en lui transmettant une information de coupure $OUTAGE_2$, avec l'acquittement négatif **NACK** (échec du décodage). On alloue une nouvelle ressource, $PRB'_2 \neq PRB_2$ au terminal relais pour une nouvelle tentative de transmission en 650.

A l'inverse, si $R \leq I_{inst}^{rd}$, le canal **r - d** n'est pas en situation de coupure. Le terminal destinataire le signifie au terminal relais, en 680, en lui transmettant une information d'absence de coupure **NOUTAGE₂,** toujours avec l'acquittement négatif **NACK**. L'allocation de la ressource **PRB₂** est maintenue pour la seconde tentative de transmission par le terminal relais en 650.

A l'étape 690, c'est-à-dire si le paquet n'a pas pu être décodé avec succès par le terminal relais, on détermine si le débit binaire de transmission est supérieur à l'information mutuelle instantanée du canal **s-d** ou à celle du canal **s-r**.

Si $R > I_{inst}^{sd}$ ou $R \leq I_{inst}^{sr}$, au moins l'un des deux canaux **s - d** et **s - r** est en situation de coupure. Des informations de coupure **OUTAGE₁** et/ou **OUTAGE'₁** sont alors renvoyées, en 695, vers le terminal source, respectivement par le terminal destinataire et/ou le terminal relais. Une nouvelle ressource **PRB'₁** est alors allouée au terminal source pour une seconde tentative de transmission en 610.

A l'inverse, si $R \leq I_{inst}^{sd}$ et $R \leq I_{inst}^{sr}$, autrement dit si aucun des deux canaux **s - d** et **s - r** n'est en situation de coupure, le terminal source effectuera une nouvelle tentative de transmission du paquet au moyen de la ressource déjà allouée, **PRB₁,** en 699.

Selon une variante (non illustrée) après s'être assuré en 640 que le décodage avait réussi au niveau du terminal relais, on vérifie, si $I_{inst}^{rd} \geq I_{inst}^{sr}$ autrement dit si l'information mutuelle instantanée sur le canal **r - d** est supérieure à celle du canal **s-r.** Si c'est le cas, on poursuit normalement en 650, avec la transmission par le relais sur la ressource **PRB₂.** Etant donné que $I_{inst}^{rd} \geq I_{inst}^{sr}$, la transmission a de bonnes chances d'être un succès en 660.

En revanche, si $I_{inst}^{rd} \leq I_{inst}^{sr}$, le terminal relais ne transmet pas le paquet au destinataire sur la ressource **PRB₂.** En effet, étant donné que la transmission sur le canal **s-d** au moyen de **PRB₁** s'est déjà soldée par un échec et que la transmission sur le canal **r-d** au moyen de **PRB₂** risque également d'échouer du fait que $I_{inst}^{rd} < I_{inst}^{sr}$, on vérifie l'état de coupure des canaux **s-d** et **s-r** en allant à l'étape 690.

Les variantes envisagées pour les premier et second modes particuliers de réalisation trouvent là encore à s'appliquer et leur description ne sera par conséquent pas répétée ici.

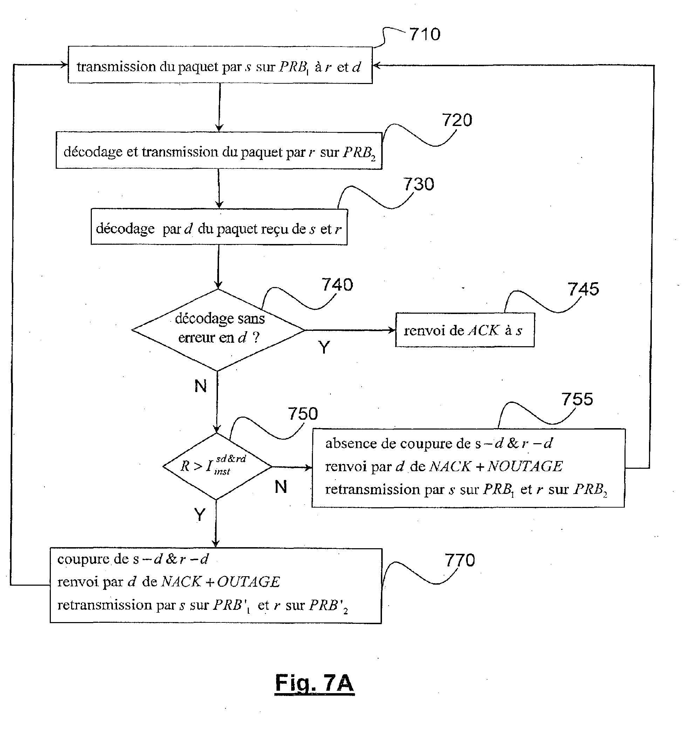

La Fig. 7A représente de manière schématique une méthode de retransmission pour un réseau coopératif, selon un cinquième mode particulier de réalisation de l'invention. Comme dans le quatrième mode, le terminal destinataire reçoit les données à la fois via le canal direct **s-d** et via un canal relayé **s-r-d** (stratégie de coopération de la Fig. 1B). Selon ce mode de réalisation, on effectue une combinaison des données reçues via le canal direct et le canal relayé.

On suppose encore que le protocole de transmission utilisé est de type DF.

A l'étape 710, le terminal source transmet un paquet de données aux terminaux destinataire et relais, au moyen d'une ressource de transmission **PRB₁.**

A l'étape 720, le terminal relais décode le paquet et, si le décodage a réussi, le transmet au destinataire sur une ressource de transmission **PRB₂,** après l'avoir recodé (à l'aide d'un code différent de celui utilisé par le terminal source ou d'un code identique). En revanche, si le décodage a échoué, le terminal relais ne transmet pas le paquet au terminal destinataire.

En 730, le terminal destinataire décode les données reçues du paquet à l'aide d'un décodage utilisant les versions codées respectivement par le terminal source et le terminal relais (diversity combining ou code combining). Ce décodage peut être itératif (turbo-décodage,) les terminaux source et relais jouent alors le rôle d'un turbocodeur spatialement distribué.

On détermine, en 740, si le terminal destinataire peut décoder le paquet sans erreur. Dans l'affirmative, il transmet un acquittement de bonne réception au terminal source en 745.

En revanche, si des erreurs sont présentes dans le paquet décodé, on détermine en 750 si le débit binaire utilisé pour la transmission est inférieur à l'information mutuelle moyenne du canal composite, résultant de la combinaison des canaux **s-d** et **r - d,** soit $I_{inst}^{sd\&rd}$. Si le système est de type OFDMA, $I_{inst}^{sd\&rd}$ pourra être évalué à l'aide de l'expression (7) (DF with diversity combining) ou (8) (DF *with* code *combining*).

Si $R \leq I_{inst}^{sd\&rd}$, le canal composite n'est pas en situation de coupure. Un acquittement négatif **NACK** ainsi qu'une information d'absence de coupure **NOUTAGE** sont alors renvoyés, en 755, vers les terminaux source et relais. On procède ensuite à une nouvelle transmission du terminal source en utilisant la même ressource **PRB₁** puis du terminal relais avec la même ressource **PRB₂**. Cela se traduit sur l'organigramme par un retour en 710.

Si $R > I_{inst}^{sd\&rd}$, le canal composite est en situation de coupure, et le terminal destinataire en avertit les terminaux source et relais à l'aide d'une information correspondante, **NOUTAGE**, en 770. Un acquittement négatif signifiant l'erreur de décodage, **NACK** est également renvoyé vers ces terminaux. On alloue alors une nouvelle ressource de transmission, **PRB'₁** au terminal source ainsi qu'une nouvelle ressource de transmission **PRB'₂** au terminal relais. Une nouvelle tentative de transmission par le terminal source puis relais est alors initiée. Cela se traduit sur l'organigramme par un retour à 710 (**PRB'₁** remplaçant **PRB₁** en 710 et **PRB'₂** remplaçant **PRB₂** en 720).

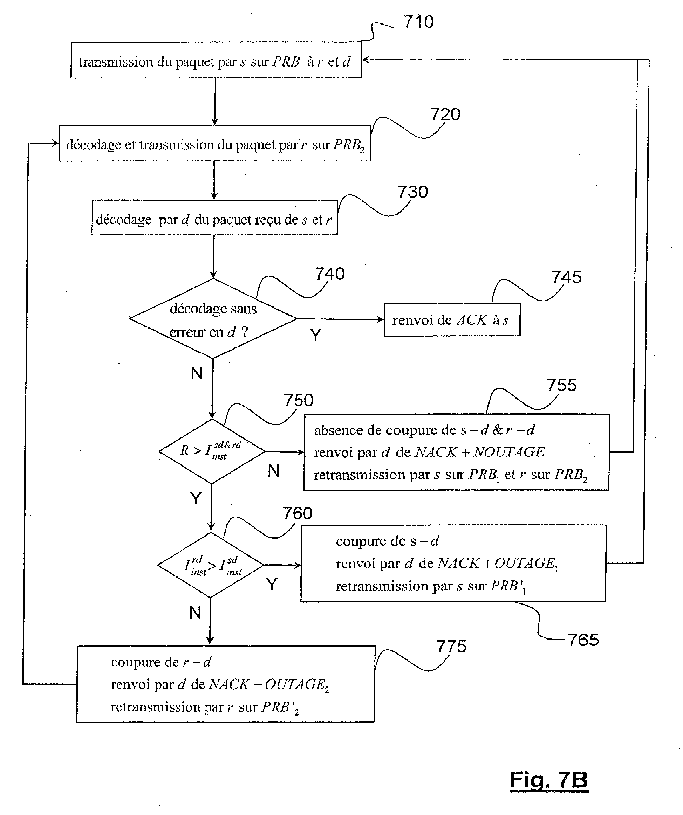

La Fig. 7B illustre schématiquement une variante du cinquième mode particulier de réalisation.

Cette variante est identique à celle de la Fig. 7A exceptée en ce qu'en cas de coupure, on ne procède pas d'emblée à une nouvelle transmission des terminaux source puis relais, mais on discrimine lequel du canal direct **s-d** et du canal relayé **s-r-d** est le plus probablement défaillant.

Pour ce faire, en cas de diagnostic de coupure du canal composite, on compare en 760 l'information mutuelle instantanée sur le canal **r - d** et celle sur le canal **s-d.**

Si $I_{inst}^{rd} > I_{inst}^{sd}$, on déclare, en 765, le canal **s - d** en situation de coupure et on renvoie vers le terminal source une information de coupure correspondante, **OUTAGE₁.** Un acquittement négatif, **NACK** est également renvoyé vers ce dernier. Enfin, le terminal source procède à une nouvelle tentative de transmission au moyen d'une nouvelle ressource **PRB'₁** ≠ **PRB₁** qui lui aura été préalablement allouée en retournant à l'étape 710.

A l' inverse, si $I_{inst}^{rd} \leq I_{inst}^{sd}$, on déclare symétriquement, en 775, le canal **r-d** en situation de coupure et l'on renvoie vers le terminal relais une information de coupure correspondante, **OUTAGE₂.** Un acquittement de réception négatif, **NACK** est aussi renvoyé vers ce dernier. Enfin, le terminal relais procède à une nouvelle tentative de transmission au moyen d'une nouvelle ressource **PRB'₂** ≠ **PRB₂** qui lui aura été préalablement allouée en retournant à l'étape 720.

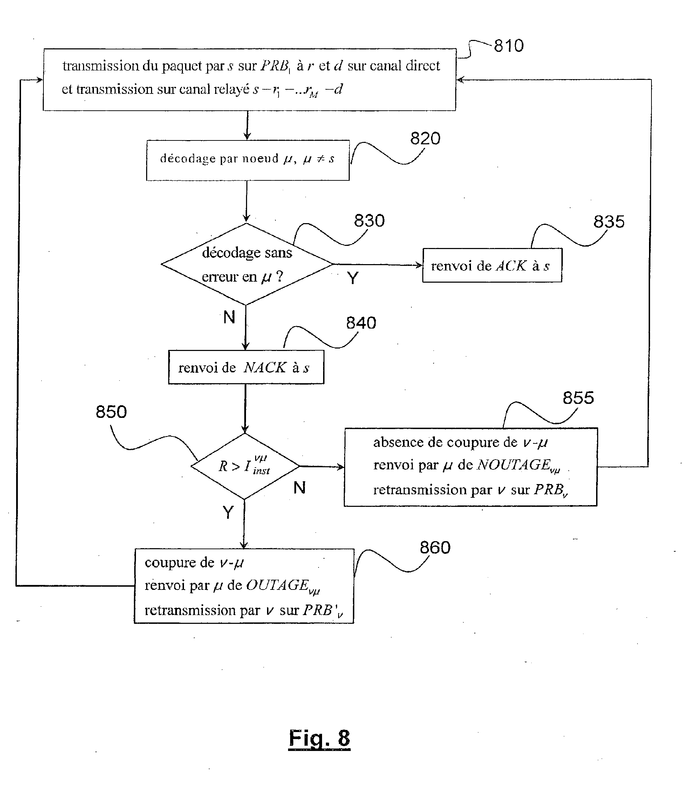

La Fig. 8 représente schématiquement une méthode de retransmission dans un réseau coopératif, selon un mode général de réalisation de l'invention.

On considère à nouveau un réseau coopératif comprenant un ensemble de noeuds dont un terminal source, un terminal destinataire et un ensemble de relais {**r₁,...,r_M**} avec **M**≥**1**.

A l'étape 810, le terminal source transmet un paquet de données qui est relayé par un ou plusieurs terminaux relais opérant selon un protocole AF ou DF. Dans le cas d'un protocole AF, on n'utilisera toutefois qu'un seul relais.

A l'étape 820, on décode le paquet en un premier noeud du réseau, $\mu$ distinct du terminal source, et l'on détermine en 830, si ce paquet peut être décodé avec succès (sans erreur). Dans l'affirmative, un signal d'acquittement de bonne réception **ACK** est renvoyé vers le terminal source en 825, et éventuellement vers les noeuds prédécesseurs de $\mu$.

A l'inverse, en cas d'erreur, à l'étape 840, le noeud $\mu$ renvoie un acquittement négatif **NACK** et l'on détermine en 850 si au moins un canal du réseau (relayé ou non) entre le prédécesseur du noeud μ, noté ν ( $\nu = \mu$ - 1 si μ > 1 et ν est le terminal source si μ = 1) et le noeud $\mu$ est en situation de coupure. Pour ce faire, on compare le débit binaire, **R**, utilisé pour la transmission du paquet, et l'information mutuelle instantanée sur le canal $\nu$ - $\mu$,

Si $R \leq I_{inst}^{\nu\mu}$, le canal $\nu$ - $\mu$ n'est pas en situation de coupure et le premier noeud $\mu$ le signale au moyen d'une information **NOUTAGE**ᵥμ en 855. Une nouvelle transmission du paquet a alors lieu sur le canal $\nu$-$\mu$ dans laquelle le second noeud ν utilise la même ressource de transmission, **PRB**ν que lors de la transmission précédente.

Si $R > I_{inst}^{\nu\mu}$, le canal $\nu$ - $\mu$ est en situation de coupure et le premier noeud $\mu$ le signale au moyen d'une information **OUTAGE**ᵥμ en 860. Une nouvelle transmission du paquet a alors lieu sur le canal ν-$\mu$ dans laquelle le second noeud **V** utilise une ressource de transmission différente, **PRB'**ᵥ de celle utilisée lors de la transmission précédente, **PRB**ᵥ.

## Revendications

1. Méthode de retransmission dans un réseau coopératif OFDMA comprenant une pluralité de noeuds dont un terminal source, un terminal destinataire et au moins un terminal relais, un paquet de données étant transmis (810) par le terminal source à destination du terminal destinataire via au moins ledit terminal relais, les ressources de transmission du réseau étant constituées par des intervalles de sous-porteuses d'un multiplex OFDM ou des pluralités de tels intervalles,

   **caractérisée en ce qu'**on détermine (830) si le paquet de données transmis par un second noeud peut être décodé sans erreur par un premier noeud distinct du terminal source et, dans la négative, on détermine (850) si au moins un canal de transmission acheminant ledit paquet entre au moins un second noeud et ledit premier noeud est en situation de coupure en comparant ledit débit binaire de transmission avec l'information mutuelle instantanée du canal de transmission, ladite situation de coupure dudit canal de transmission étant établie lorsque le débit binaire de transmission est supérieur à l'information mutuelle instantanée de ce canal et que:

   > si ledit canal est en situation de coupure, ledit second noeud transmet (855) une nouvelle fois le paquet en utilisant une ressource de transmission différente de celle utilisée par ce noeud lors de sa précédente transmission dudit paquet ; et
   > si ledit canal n'est pas en situation de coupure, ledit second noeud transmet (860) une nouvelle fois le paquet en utilisant une même ressource de transmission que celle utilisée par ce même noeud lors de sa précédente transmission dudit paquet.

2. Méthode de retransmission selon la revendication 1, **caractérisée en ce que** le premier noeud étant le terminal destinataire, le second noeud étant le terminal source, et ledit terminal relais utilisant un protocole AF, on détermine (340) si le terminal destinataire peut décoder le paquet de données sans erreur, et dans la négative, on détermine (350) si le canal de transmission entre le terminal source et le terminal destinataire, relayé par le terminal relais est en situation de coupure et,

   si ledit canal est en situation de coupure, les terminaux source et relais utilisent pour la nouvelle transmission dudit paquet (355) sur le canal relayé, des ressources de transmission différentes de celles utilisées pour la transmission précédente dudit paquet sur ce canal ; et

   dans le cas inverse, les terminaux source et relais utilisent pour la nouvelle transmission (360) dudit paquet sur le canal relayé, les mêmes ressources de transmission que celles utilisées pour la transmission précédente dudit paquet sur ce canal.

3. Méthode de retransmission selon la revendication 1, **caractérisée en ce que** le premier noeud étant le terminal destinataire, le second noeud étant le terminal source, et ledit terminal relais utilisant un protocole AF, on détermine si le terminal destinataire peut décoder le paquet de données sans erreur, et dans la négative, on détermine si le canal de transmission entre le terminal source et le terminal destinataire, relayé par le terminal relais est en situation de coupure, et en cas de coupure du canal relayé ($s$-$r$-$d$), on vérifie à l'aide d'une démodulation partielle des données reçues par le terminal relais si le canal de transmission ($s$ - $r$) entre le terminal source et le terminal relais est lui-même en situation de coupure, et

   si le canal relayé ($s$-$r$-$d$) n'est pas en situation de coupure, les terminaux source et relais utilisent pour la nouvelle transmission dudit paquet sur le canal relayé, les mêmes ressources de transmission ($PRB_1$, $PRB_2$) que celles utilisées pour la transmission précédente dudit paquet sur ce canal;

   si le canal relayé ($s$-$r$-$d$) est en situation de coupure mais que le canal ($s$-$r$) entre le terminal source et le terminal relais ne l'est pas, le terminal source utilise une même ressource de transmission ($PRB_1$) que celle utilisée pour la transmission dudit paquet sur le canal ($s$ - $r$) entre le terminal source et le terminal relais lors de la transmission précédente, et le terminal relais utilise une ressource de transmission différente ($PRB'_2$) de celle ($PRB_2$) utilisée pour la transmission dudit paquet sur le canal ($r$-$d$) entre le terminal relais et le terminal destinataire lors de la transmission précédente;

   si le canal relayé ($s$ - $r$ - $d$) est en situation de coupure et que le canal ($s$-$r$) entre le terminal source et le terminal relais l'est également, le terminal source utilise une ressource de transmission ($PRB'_1$) différente de celle ($PRB_1$) utilisée pour la transmission dudit paquet sur le canal ($s$-$r$) entre le terminal source et le terminal relais lors de la transmission précédente, et le terminal relais utilise la même ressource de transmission ($PRB_2$) que celle utilisée pour la transmission dudit paquet sur le canal ($r$ - $d$) entre le terminal relais et le terminal destinataire lors de la transmission précédente ($PRB_2$).

4. Méthode de retransmission selon la revendication 1, **caractérisée en ce que** le premier noeud étant le terminal destinataire, le second noeud étant le terminal relais, et ledit terminal relais utilisant un protocole DF, on détermine si le terminal destinataire peut décoder le paquet de données sans erreur (450), et dans la négative, on détermine (460) si le canal de transmission (*r-d*) entre le terminal relais et le terminal destinataire est en situation de coupure, et, si ce canal est en situation de coupure (465), le terminal relais utilise une ressource de transmission ($PRB'_2$) différente de celle ($PRB_2$) utilisée pour la transmission dudit paquet sur le canal (*r-d*) entre le terminal relais et le terminal destinataire lors de la transmission précédente,

dans le cas inverse, (470), le terminal relais utilise la même ressource de transmission ($PRB_2$) utilisée pour la transmission dudit paquet sur le canal (*r-d*) entre le terminal relais et le terminal destinataire lors de la transmission précédente.

5. Méthode de retransmission selon la revendication 4, **caractérisée en ce que**, préalablement à la transmission dudit paquet par le terminal relais, on détermine (430) si le terminal relais peut décoder le paquet de données sans erreur, et, dans la négative, on détermine (480) si le canal de transmission (*s-r*) entre le terminal source et le terminal relais est en situation de coupure et,

si ce canal est en situation de coupure, le terminal source utilise une ressource de transmission différente ($PRB'_1$) de celle ($PRB_1$) utilisée pour la transmission (485) dudit paquet sur le canal (*s-r*) entre le terminal source et le terminal relais lors de la transmission précédente,

et à l'inverse, le terminal source utilise la même ressource de transmission ($PRB_1$) utilisée pour la transmission (490) dudit paquet sur le canal (*s-r*) entre le terminal source et le terminal relais lors de la transmission précédente.

6. Méthode de retransmission selon la revendication 1, **caractérisée en ce que** le terminal source transmet (620) d'une part ledit paquet sur un canal direct (*s-d*) et d'autre part sur un canal relayé (*s-r-d*) au terminal destinataire, le terminal relais opérant selon un protocole DF et utilisant le même code ou un code différent de celui utilisé par le terminal source pour coder le paquet préalablement à sa transmission.

7. Méthode de retransmission selon la revendication 6, **caractérisée en ce que** le premier noeud est le terminal destinataire et le second noeud est le terminal relais, on détermine (660) si le terminal destinataire peut décoder sans erreur le paquet reçu sur le canal relayé, et, dans la négative, on détermine (670) si le canal de transmission (*r-d*) entre le terminal relais et le terminal destinataire est en situation de coupure, et,

si ce canal est en situation de coupure, le terminal relais transmet (675) une nouvelle fois ledit paquet sur une ressource de transmission ($PRB'_2$) différente de celle ($PRB_2$) utilisée pour la transmission dudit paquet sur le canal (*r-d*) entre le terminal relais et le terminal destinataire lors de la transmission précédente,

dans le cas inverse, le terminal relais transmet (680) une nouvelle fois ledit paquet sur la même ressource de transmission ($PRB_2$) utilisée pour la transmission dudit paquet sur le canal (*r-d*) entre le terminal relais et le terminal destinataire lors de la transmission précédente.

8. Méthode de retransmission selon la revendication 7, **caractérisée en ce qu'**avant de déterminer si le terminal destinataire peut décoder sans erreur le paquet reçu sur le canal relayé, on détermine (630) d'abord si le terminal destinataire peut décoder sans erreur le paquet reçu sur le canal direct, et, dans la négative, on détermine (640) si le terminal relais peut alors décoder le paquet sans erreur, et, si ce n'est toujours pas le cas, on vérifie (690) si au moins le canal direct (*s-d*) et le canal (*s-r*) entre le terminal source et le terminal relais sont en situation de coupure, et en cas de coupure de l'un ou l'autre canal, le terminal source transmet (695) une nouvelle fois ledit paquet sur les canaux direct et relayé, en utilisant une ressource de transmission différente ($PRB'_1$) de celle ($PRB_1$) utilisée pour la transmission précédente dudit paquet,

en absence de coupure de ces deux canaux, le terminal source transmet (699) une nouvelle fois ledit paquet sur les canaux direct et relayé, en utilisant la même ressource de transmission ($PRB_1$) utilisée pour la transmission précédente dudit paquet.

9. Méthode de retransmission selon la revendication 7, **caractérisée en ce que** si le décodage dudit paquet est erroné au niveau du terminal destinataire mais dépourvu d'erreur au niveau du terminal relais, on compare l'information

mutuelle instantanée ($I^{rd}_{inst}$) sur le canal (*r-d*) entre le terminal relais et le terminal destinataire, et celle ($I^{sd}_{inst}$) sur le canal direct (*s-d*), et

si la première est supérieure à la seconde : le terminal relais transmet (650) ledit paquet au terminal destinataire ; dans le cas inversé

on vérifie (690) si au moins le canal direct (*s-d*) ou le canal (*s-r*) entre le terminal source et le terminal relais est en situation de coupure, et

en cas de coupure de l'un ou l'autre canal, le terminal source transmet (695) une nouvelle fois ledit paquet sur les canaux direct et relayé, en utilisant une ressource de transmission différente ($PRB'_1$) de celle ($PRB_1$) utilisée pour

la transmission précédente dudit paquet,
en absence de coupure de ces deux canaux, le terminal source transmet (699) une nouvelle fois ledit paquet sur les canaux direct et relayé, en utilisant la même ressource de transmission ($PRB_1$) utilisée pour la transmission précédente dudit paquet.

**10.** Méthode de retransmission selon la revendication 1, **caractérisée en ce que** le terminal source transmet (710) d'une part ledit paquet sur un canal direct (*s-d*) et d'autre part sur un canal relayé (*s- r -d*) au terminal destinataire, le terminal relais utilisant un code différent de celui utilisé par le terminal source pour coder le paquet préalablement à sa transmission, le terminal destinataire réalisant une combinaison des données reçues via le canal direct et via le canal relayé.

**11.** Méthode de retransmission selon la revendication 10, **caractérisée en ce que** ladite combinaison est réalisée par concaténation des données reçues via le canal direct et celles reçues via le canal relayé.

**12.** Méthode de retransmission selon la revendication 1, **caractérisée en ce que** le terminal source transmet (710) d'une part ledit paquet sur un canal direct (*s-d*) et d'autre part sur un canal relayé (*s-r-d*) au terminal destinataire, le terminal relais utilisant le même code que celui utilisé par le terminal source pour coder le paquet préalablement à sa transmission, le terminal destinataire réalisant une combinaison des données reçues via le canal direct et via le canal relayé.

**13.** Méthode de retransmission selon la revendication 12, **caractérisée en ce que** ladite combinaison est réalisée par sommation des valeurs souples des données reçues via le canal direct et des valeurs souples des données reçues via le canal relayé.

**14.** Méthode de retransmission selon la revendication 10, 11, 12 ou 13, **caractérisée en ce que** le terminal destinataire effectue un décodage (730) dudit paquet en utilisant le paquet codé reçu du terminal source, d'une part, et le paquet reçu du terminal relais, d'autre part et, dans le cas où ledit paquet ne peut être décodé sans erreur, (740) on détermine (750) si le canal composite (*sd & rd*) résultant de la combinaison du canal direct (*s - d* ) et du canal entre le terminal relais et le terminal destinataire (*r - d*) est en situation de coupure, et

en absence de coupure dudit canal composite, le terminal source transmet (755) une nouvelle fois ledit paquet sur les canaux direct et relayé, en utilisant la même ressource de transmission ($PRB_1$) utilisée pour la transmission précédente dudit paquet,et le terminal relais retransmet ledit paquet sur la même ressource de transmission ($PRB_2$) utilisée pour la transmission précédente ;

en cas de coupure du canal composite, on compare (760) l'information mutuelle instantanée $\langle I_{inst}^{rd} \rangle$ sur le canal

(*r - d*) entre le terminal relais et le terminal destinataire et celle $(I_{inst}^{sd})$ sur le canal direct (*s - d*), et,

si la première est supérieure à la seconde :

le terminal source transmet (765) une nouvelle fois ledit paquet en utilisant une ressource de transmission différente ($PRB'_1$) de celle ($PRB_1$) utilisée pour la transmission précédente dudit paquet,

et dans le cas inverse :

le terminal relais transmet (775) une nouvelle fois ledit paquet en utilisant une ressource de transmission différente *($PRB'_2$)* de celle ($PRB_2$) utilisée pour la transmission précédente dudit paquet.

**Patentansprüche**

**1.** Verfahren zur Neuübertragung in einem kooperativen OFDMA-Netzwerk, umfassend eine Mehrzahl von Knoten, worunter ein Quellenterminal, ein Zielterminal und wenigstens ein Relaisterminal, wobei ein Datenpaket von dem Quellenterminal mit dem Ziel des Zielterminals über wenigstens das Relaisterminal übertragen wird (810), wobei die Übertragungsressourcen des Netzwerks durch Unterträgerintervalle eines OFDM-Multiplex oder durch mehrere derartige Intervalle gebildet sind,
**dadurch gekennzeichnet, dass** man bestimmt (830), ob das durch einen zweiten Knoten übertragene Datenpaket fehlerfrei durch einen ersten Knoten decodiert werden kann, der von dem Quellenterminal verschieden ist, und, falls nein, man bestimmt (850), ob wenigstens ein Übertragungskanal, der das Paket zwischen wenigstens einem zweiten Knoten und dem ersten Knoten führt, in einer Unterbrechungssituation ist, indem man die Übertragungsbitrate mit der momentanen wechselseitigen Übertragungskanalinformation vergleicht, wobei die Unterbrechungssituation des Übertragungskanals festgestellt wird, wenn die Übertragungsbitrate größer als die wechselseitige momentane Information dieses Kanals ist, und dass:

wenn der Kanal in einer Unterbrechungssituation ist, der zweite Knoten das Paket erneut überträgt (855) unter Verwendung einer Übertragungsressource, die verschieden ist von jener, die durch diesen Knoten während seiner vorhergehenden Übertragung des Pakets verwendet wurde; und

wenn der Kanal nicht in einer Unterbrechungssituation ist, der zweite Knoten erneut das Paket überträgt (860) unter Verwendung der gleichen Übertragungsressource wie jene, die von diesem gleichen Knoten während seiner vorhergehenden Übertragung des Pakets verwendet wurde.

2. Verfahren zur Neuübertragung nach Anspruch 1, **dadurch gekennzeichnet, dass** der erste Knoten das Zielterminal ist, und der zweite Knoten das Quellenterminal ist, wobei das Relaisterminal ein AF-Protokoll verwendet, wobei man bestimmt (340), ob das Zielterminal das Datenpaket fehlerfrei decodieren kann, und falls nein, man bestimmt (350), ob der Übertragungskanal zwischen dem Quellenterminal und dem Zielterminal, mit Weiterleitung über das Relaisterminal, in einer Unterbrechungssituation ist, und

wenn der Kanal in einer Unterbrechungssituation ist, das Quellenterminal und das Relaisterminal für die erneute Übertragung des Pakets (355) über den Weiterleitungskanal Übertragungsressourcen verwenden, die verschieden sind von jenen, die für die vorhergehende Übertragung des Pakets auf diesem Kanal verwendet wurden; und

im entgegengesetzten Fall das Quellenterminal und das Relaisterminal für die erneute Übertragung (360) des Pakets auf dem Weiterleitungskanal die gleichen Übertragungsressourcen verwenden wie jene, die für die vorhergehende Übertragung des Pakets auf diesem Kanal verwendet wurden.

3. Verfahren zur Neuübertragung nach Anspruch 1, **dadurch gekennzeichnet, dass** der erste Knoten das Zielterminal ist, und der zweite Knoten das Quellenterminal ist, wobei das Relaisterminal ein AF-Protokoll verwendet, wobei man bestimmt, ob das Zielterminal das Datenpaket fehlerfrei decodieren kann, und falls nein, man bestimmt, ob der Übertragungskanal zwischen dem Quellenterminal und dem Zielterminal, mit Weiterleitung durch das Relaisterminal, in einer Unterbrechungssituation ist, und im Fall einer Unterbrechung des Weiterleitungskanals (s-r-d) man mit Hilfe einer partiellen Demodulation der durch das Relaisterminal empfangenen Daten überprüft, ob der Übertragungskanal (s-r) zwischen dem Quellenterminal und dem Relaisterminal selbst in einer Unterbrechungssituation ist, und

wenn der Weiterleitungskanal (s-r-d) nicht in einer Unterbrechungssituation ist, das Quellenterminal und das Relaisterminal für die erneute Übertragung des Pakets auf dem Weiterleitungskanal die gleichen Übertragungsressourcen ($PRB_1$, $PRB_2$) verwenden wie jene, die für die vorhergehende Übertragung des Pakets auf diesem Kanal verwendet wurden;

wenn der Weiterleitungskanal (s-r-d) in einer Unterbrechungssituation ist, aber der Kanal (s-r) zwischen dem Quellenterminal und dem Relaisterminal es nicht ist, das Quellenterminal die gleiche Übertragungsressource ($PRB_1$) verwendet wie jene, die für die Übertragung des Pakets auf dem Kanal (s-r) zwischen dem Quellenterminal und dem Relaisterminal während der vorhergehenden Übertragung verwendet wurde, und das Relaisterminal eine andere Übertragungsressource ($PRB'_2$) als jene ($PRB_2$) verwendet, die für die Übertragung des Pakets auf dem Kanal (r-d) zwischen dem Relaisterminal und dem Zielterminal während der vorhergehenden Übertragung verwendet wurde;

wenn der Weiterleitungskanal (s-r-d) in einer Unterbrechungssituation ist, und der Kanal (s-r) zwischen dem Quellenterminal und dem Relaisterminal es ebenfalls ist, das Quellenterminal eine andere Übertragungsressource ($PRB'_1$) verwendet als jene ($PRB_1$), die für die Übertragung des Pakets auf dem Kanal (s-r) zwischen dem Quellenterminal und dem Relaisterminal während der vorhergehenden Übertragung verwendet wurde, und das Relaisterminal die gleiche Übertragungsressource ($PRB_2$) wie jene verwendet, die für die Übertragung des Pakets auf dem Kanal (r-d) zwischen dem Relaisterminal und dem Zielterminal während der vorhergehenden Übertragung ($PRB_2$) verwendet wurde.

4. Verfahren zur Neuübertragung nach Anspruch 1, **dadurch gekennzeichnet, dass** der erste Knoten das Zielterminal ist, und der zweite Knoten das Relaisterminal ist, wobei das Relaisterminal ein DF-Protokoll verwendet, wobei man bestimmt, ob das Zielterminal das Datenpaket fehlerfrei decodieren kann (450), und falls nein, man bestimmt (460), ob der Übertragungskanal (r-d) zwischen dem Relaisterminal und dem Zielterminal in einer Unterbrechungssituation ist, und

wenn dieser Kanal in einer Unterbrechungssituation ist (465), das Relaisterminal eine andere Übertragungsres-

source (PRB'$_2$) verwendet als jene (PRB$_2$), die für die Übertragung des Pakets auf dem Kanal (r-d) zwischen dem Relaisterminal und dem Zielterminal während der vorhergehenden Übertragung verwendet wurde, und im entgegengesetzten Fall (470) das Relaisterminal die gleiche Übertragungsressource (PRB$_2$) verwendet, die für die Übertragung des Pakets auf dem Kanal (r-d) zwischen dem Relaisterminal und dem Zielterminal während der vorhergehenden Übertragung verwendet wurde.

**5.** Verfahren zur Neuübertragung nach Anspruch 4, **dadurch gekennzeichnet, dass** man vor der Übertragung des Pakets durch das Relaisterminal bestimmt (430), ob das Relaisterminal das Datenpaket fehlerfrei decodieren kann, und falls nein, man bestimmt (480), ob der Übertragungskanal (s-r) zwischen dem Quellenterminal und dem Relaisterminal in einer Unterbrechungssituation ist, und wenn dieser Kanal in einer Unterbrechungssituation ist, das Quellenterminal eine andere Übertragungsressource (PRB'$_1$) verwendet als jene (PRB$_1$), die für die Übertragung (485) des Pakets auf dem Kanal (s-r) zwischen dem Quellenterminal und dem Relaisterminal während der vorhergehenden Übertragung verwendet wurde, und im entgegengesetzten Fall das Quellenterminal die gleiche Übertragungsressource (PRB$_1$) verwendet, die für die Übertragung (490) des Pakets auf dem Kanal (s-r) zwischen dem Quellenterminal und dem Relaisterminal während der vorhergehenden Übertragung verwendet wurde.

**6.** Verfahren zur Neuübertragung nach Anspruch 1, **dadurch gekennzeichnet, dass** das Quellenterminal einerseits das Paket auf einem direkten Kanal (s-d) und andererseits auf einem Weiterleitungskanal (s-r-d) an das Zielterminal überträgt (620), wobei das Relaisterminal gemäß einem DF-Protokoll arbeitet und den gleichen Code wie oder einen anderen Code als jenen verwendet, der durch das Quellenterminal zum Codieren des Pakets vor seiner Übertragung verwendet wird.

**7.** Verfahren zur Neuübertragung nach Anspruch 6, **dadurch gekennzeichnet, dass** der erste Knoten das Zielterminal ist, und der zweite Knoten das Relaisterminal ist, wobei man bestimmt (660), ob das Zielterminal das auf dem Weiterleitungskanal empfangene Paket fehlerfrei decodieren kann, und falls nein, man bestimmt (670), ob der Übertragungskanal (r-d) zwischen dem Relaisterminal und dem Zielterminal in einer Unterbrechungssituation ist, und wenn dieser Kanal in einer Unterbrechungssituation ist, das Relaisterminal das Paket erneut auf einer Übertragungsressource (PRB'$_2$) überträgt, die verschieden ist von jener (PRB$_2$), die für die Übertragung des Pakets auf dem Kanal (r-d) zwischen dem Relaisterminal und dem Zielterminal während der vorhergehenden Übertragung verwendet wurde, und im entgegengesetzten Fall das Relaisterminal das Paket erneut auf der gleichen Übertragungsressource (PRB$_2$) überträgt (680), die für die Übertragung des Pakets auf dem Kanal (r-d) zwischen dem Relaisterminal und dem Zielterminal während der vorhergehenden Übertragung verwendet wurde.

**8.** Verfahren zur Neuübertragung nach Anspruch 7, **dadurch gekennzeichnet, dass** man vor der Bestimmung, ob das Zielterminal das auf dem Weiterleitungskanal empfangene Paket fehlerfrei decodieren kann, zunächst bestimmt (630), ob das Zielterminal das auf dem direkten Kanal empfangene Paket fehlerfrei decodieren kann, und falls nein, man bestimmt (640), ob das Relaisterminal dann das Paket fehlerfrei decodieren kann, und wenn dies immer noch nicht der Fall ist, man überprüft (690), ob wenigstens der direkte Kanal (s-d) und der Kanal (s-r) zwischen dem Quellenterminal und dem Relaisterminal in einer Unterbrechungssituation sind, und im Fall einer Unterbrechung des einen oder des anderen Kanals das Quellenterminal erneut das Paket auf dem direkten Kanal und dem Weiterleitungskanal unter Verwendung einer anderen Übertragungsressource (PRB'$_1$) als jene (PRB$_1$) überträgt, die für die vorhergehende Übertragung des Pakets verwendet wurde, wobei in Abwesenheit einer Unterbrechung dieser beiden Kanäle das Quellenterminal das Paket erneut auf dem direkten Kanal und dem Weiterleitungskanal unter Verwendung der gleichen Übertragungsressource (PRB$_1$) überträgt, die für die vorhergehende Übertragung des Pakets verwendet wurde.

**9.** Verfahren zur Neuübertragung nach Anspruch 7, **dadurch gekennzeichnet, dass** wenn die Decodierung des Pakets im Bereich des Zielterminals fehlerhaft ist, jedoch im Bereich des Relaisterminals fehlerfrei, man die momentane wechselseitige Information $\left(I_{inst}^{rd}\right)$ auf dem Kanal (r-d) zwischen dem Relaisterminal und dem Zielterminal und jene $I_{inst}^{sd}$ auf dem direkten Kanal (s-d) vergleicht, und wenn die Erstgenannte größer ist als die Zweitgenannte: das Relaisterminal das Paket an das Zielterminal überträgt (650) ; wobei im entgegengesetzten Fall:

man überprüft (690), ob wenigstens der direkte Kanal (s-d) oder der Kanal (s-r) zwischen dem Quellenterminal und dem Relaisterminal in einer Unterbrechungssituation ist, und

im Fall einer Unterbrechung des einen oder des anderen Kanals das Quellenterminal das Paket erneut auf dem direkten Kanal und dem Weiterleitungskanal unter Verwendung einer anderen Übertragungsressource (PRB'$_1$) als jene (PRB$_1$) überträgt (695), die für die vorhergehende Übertragung des Pakets verwendet wurde,

wobei in Abwesenheit einer Unterbrechung dieser beiden Kanäle das Quellenterminal das Paket erneut auf dem direkten Kanal und dem Weiterleitungskanal unter Verwendung der gleichen Übertragungsressource (PRB$_1$) überträgt (699), die für die vorhergehende Übertragung des Pakets verwendet wurde.

**10.** Verfahren zur Neuübertragung nach Anspruch 1, **dadurch gekennzeichnet, dass** das Quellenterminal einerseits das Paket auf einem direkten Kanal (s-d) und andererseits auf einem Weiterleitungskanal (s-r-d) zum Zielterminal überträgt (710), wobei das Relaisterminal einen anderen Code verwendet als jenen, der durch das Quellenterminal zum Codieren des Pakets vor seiner Übertragung verwendet wird, wobei das Zielterminal eine Kombination der Daten realisiert, die über den direkten Kanal und über den Weiterleitungskanal empfangen werden.

**11.** Verfahren zur Neuübertragung nach Anspruch 10, **dadurch gekennzeichnet, dass** die Kombination durch Verknüpfung der über den direkten Kanal empfangenen Daten mit jenen realisiert wird, die über den Weiterleitungskanal empfangen werden.

**12.** Verfahren zur Neuübertragung nach Anspruch 1, **dadurch gekennzeichnet, dass** das Quellenterminal einerseits das Paket auf einem direkten Kanal (s-d) und andererseits auf einem Weiterleitungskanal (s-r-d) zum Zielterminal überträgt (710), wobei das Relaisterminal den gleichen Code verwendet wie jenen, der durch das Quellenterminal zum Codieren des Pakets vor seiner Übertragung verwendet wird, wobei das Zielterminal eine Kombination der Daten realisiert, die über den direkten Kanal und über den Weiterleitungskanal empfangen werden.

**13.** Verfahren zur Neuübertragung nach Anspruch 12, **dadurch gekennzeichnet, dass** die Kombination durch Summieren der Soft-Werte der über den direkten Kanal empfangenen Daten und der Soft-Werte der über den Weiterleitungskanal empfangenen Daten realisiert wird.

**14.** Verfahren zur Neuübertragung nach Anspruch 10, 11, 12 oder 13, **dadurch gekennzeichnet, dass** das Zielterminal eine Decodierung (730) des Pakets durchführt unter Verwendung des vom Quellenterminal empfangenen codierten Pakets einerseits und des vom Relaisterminal empfangenen Pakets andererseits, und man in dem Fall, wo das Paket nicht fehlerfrei decodiert werden kann (740), bestimmt (750), ob der Mischkanal (sd&rd), der aus der Kombination des direkten Kanals (s-d) und des Kanals zwischen dem Relaisterminal und dem Zielterminal (r-d) resultiert, in einer Unterbrechungssituation ist, und

wobei in Abwesenheit einer Unterbrechung des Mischkanals das Quellenterminal das Paket erneut auf dem direkten Kanal und dem Weiterleitungskanal unter Verwendung der gleichen Übertragungsressource (PRB$_1$) überträgt (755), die für die vorhergehende Übertragung des Pakets verwendet wurde, und das Relaisterminal das Paket auf der gleichen Übertragungsressource (PRB$_2$) erneut überträgt, die für die vorhergehende Übertragung verwendet wurde;

wobei im Fall einer Unterbrechung des Mischkanals man die momentane wechselseitige Information $(I_{inst}^{rd})$ auf dem Kanal (r-d) zwischen dem Relaisterminal und dem Zielterminal und jene $(I_{inst}^{sd})$ auf dem direkten Kanal (s-d) vergleicht (760), und

wenn die Erstgenannte größer ist als die Zweitgenannte:

das Quellenterminal das Paket erneut unter Verwendung einer anderen Übertragungsressource (PRB'$_1$) als jene (PRB$_1$) überträgt (765), die für die vorhergehende Übertragung des Pakets verwendet wurde,

und im entgegengesetzten Fall:

das Relaisterminal das Paket erneut unter Verwendung einer anderen Übertragungsressource (PRB'$_2$) als jene (PRB$_2$) überträgt (775), die für die vorhergehende Übertragung des Pakets verwendet wurde.

**Claims**

1.  A method of forwarding in an OFDMA cooperative network, comprising a plurality of nodes including a source terminal, a destination terminal, and at least one relay terminal, a data packet being transmitted (810) by the source terminal to the destination terminal via at least said relay terminal, the network transmission resources being constituted by chunks of sub-carriers of an OFDM multiplex or by plurality of said chunks,
    **characterized in that** a determination is made (830) whether the data packet transmitted by a second node can be decoded without errors by a first node distinct from the source terminal and, if not, a determination is made (850) whether at least one transmission channel routing said packet between at least one second node and said first node is in an outage state by comparing said transmission binary rate with the instantaneous mutual information of said transmission channel, said outage stage of said transmission channel being established when the transmission binary rate is higher that the instantaneous mutual information of said channel and that:

    if said channel is in an outage state, said second node retransmits (855) the packet using a transmission resource different from the one used by this node in the preceding transmission of said packet; and
    if said channel is not in an outage state, said second node retransmits (860) the packet by using the same transmission resource as the one used by the same node in the preceding transmission of said packet.

2.  The forwarding method according to claim 1, **characterized in that** the first node being the destination terminal, the second node being the source terminal, and said relay terminal using an AF protocol, a determination is made (340) whether the destination terminal can decode the data packet without errors, and if not, a determination is made (350) whether the transmission channel between the source terminal and the destination terminal, relayed by the relay terminal is in an outage state and,
    if said channel is in an outage state, the source and relay terminals use for the new transmission of said packet (355) on the relayed channel, transmission resources different from those used for the preceding transmission of said packet on this channel; and
    in the opposite case, the source and relay terminals use for the new transmission (360) of said packet on the relayed channel, the same transmission resources as those used for the preceding transmission of said packet on this channel.

3.  The forwarding method according to claim 1, **characterized in that** the first node being the destination terminal, the second node being the source terminal, and said relay terminal using an AF protocol, a determination is made whether the destination terminal can decode the data packet without errors, and if not, a determination is made whether the transmission channel between the source terminal and the destination terminal, relayed by the relay terminal is in an outage state, and in case of outage of the relayed channel (*s-r-d*), a verification is made by means of partial demodulation of the data received by the relay terminal if the transmission channel (*s-r*) between the source terminal and the relay terminal is in turn in an outage state, and
    if the relayed channel (*s-r-d*) is not in an outage state, the source and relay terminals will use for retransmission of said packet on the relayed channel the same transmission resources ($PRB_1, PRB_2$) as those used for the preceding transmission of said packet on this channel;
    if the relayed channel (*s-r-d*) is in an outage state, but that the channel (*s-r*) between the source terminal and the relay terminal is not, the source terminal will use the same transmission resource ($PRB_1$) as the one used for transmission of said packet on channel (*s-r*) between the source terminal and the relay terminal in the preceding transmission, and the relay terminal will use a transmission resource different ($PRB'_2$) from the one ($PRB_2$) used for the transmission of said packet on channel (*r-d*) between the relay terminal and the destination terminal in the preceding transmission;
    if the relayed channel (*s-r-d*) is in an outage state and the channel (*s-r*) between the source terminal and the relay terminal is also out, the source terminal will use a transmission resource ($PRB'_1$) different from the one ($PRB_1$) used for the transmission of said packet on channel (*s-r*) between the source terminal and the relay terminal in the preceding transmission, and the relay terminal will use the same transmission resource ($PRB_2$) as the one used for the transmission of said packet on the channel (*r-d*) between the relay terminal and the destination terminal in the preceding transmission ($PRB_2$).

4.  The forwarding method according to claim 1, **characterized in that** the first node being the destination terminal, the second node being the relay terminal, and said relay terminal using a DF protocol, a determination is made whether the destination terminal can decode the data packet without errors (450), and if not, a determination is made (460) whether the transmission channel (*r-d*) between the relay terminal and the destination terminal is in an outage state, and,

if this channel is in an outage state (465), the relay terminal will use a transmission resource ($PRB'_2$) different from the one ($PRB_2$) used for the transmission of said packet on channel (*r-d*) between the relay terminal and the destination terminal in the preceding transmission,

in the opposite case, (470), the relay terminal will use the same transmission resource ($PRB_2$) used for the transmission of said packet on channel (*r-d*) between the relay terminal and the destination terminal in the preceding transmission.

5. The forwarding method according to claim 4, **characterized in that**, prior to the transmission of said packet by the relay terminal, a determination is made (430) whether the relay terminal can decode the data packet without errors, and, if not, a determination is made (480) whether the transmission channel (*s-r*) between the source terminal and the relay terminal is in an outage state and,

if this channel is in an outage state, the source terminal will use a transmission resource different ($PRB'_1$) from the one ($PRB_1$) used for the transmission (485) of said packet on the channel (*s-r*) between the source terminal and the relay terminal in the preceding transmission,

and conversely, the source terminal will use the same transmission resource ($PRB_1$) used for the transmission (490) of said packet on the channel (*s-r*) between the source terminal and the relay terminal in the preceding transmission.

6. The forwarding method according to claim 1, **characterized in that** the source terminal transmits (620) on the one hand said packet on a direct channel (*s-d*) and on the other hand on a relayed channel (*s-r-d*) to the destination terminal, the relay terminal operating according to a DF protocol and using the same code or a code different therefrom used by the source terminal for coding the packet prior to transmission thereof.

7. The forwarding method according to claim 6, **characterized in that** the first node is the destination terminal and the second node is the relay terminal, a determination is made (660) whether the destination terminal can decode without errors the packet received on the relayed channel, and, if not, a determination is made (670) whether the transmission channel (*r-d*) between the relay terminal and the destination terminal is in an outage state, and,

if this channel is in an outage state, the relay terminal retransmits (675) said packet on a transmission resource ($PRB'_2$) different from the one ($PRB_2$) used for the transmission of said packet on the channel (*r-d*) between the relay terminal and the destination terminal in the preceding transmission,

in the opposite case, the relay terminal retransmits (680) said packet on the same transmission resource ($PRB_2$) used for the transmission of said packet on the channel (*r-d*) between the relay terminal and the destination terminal in the preceding transmission.

8. The forwarding method according to claim 7, **characterized in that** before determining whether the destination terminal can decode without errors the packet received on the relayed channel, first of all a determination is made (630) whether the destination terminal can decode without errors the packet received on the direct channel, and, if not, a determination is made (640) whether the relay terminal can then decode the packet without errors, and, if this is still not the case, a verification is made (690) whether at least the direct channel (*s-d*) and the channel (*s-r*) between the source terminal and the relay terminal are in an outage state, and

in case of outage of either of the channels, the source terminal retransmits (695) said packet on the direct and relayed channels, using a transmission resource different ($PRB'_1$) from the one ($PRB_1$) used for the preceding transmission of said packet,

if there is no outage of these two channels, the source terminal retransmits (699) said packet on the direct and relayed channels, using the same transmission resource ($PRB_1$) used for the preceding transmission of said packet.

9. The forwarding method according to claim 7, **characterized in that** if decoding of said packet is incorrect at the destination terminal but error-free at the relay terminal, the instantaneous mutual information $( I_{inst}^{rd} )$ on the

channel (*r-d*) between the relay terminal and the destination terminal, and that $( I_{inst}^{sd} )$ on the direct channel

(*s-d*) are compared, and

if the first is greater than the second: the relay terminal transmits (650) said packet to the destination terminal;

in the opposite case:

a verification is made (690) if at least the direct channel (*s-d*) or the channel (*s-r*) between the source terminal and the relay terminal is in an outage state, and

in case of outage of either of the channels, the source terminal retransmits (695) said packet on the direct and relayed channels, using a transmission resource different ($PRB'_1$) from the one ($PRB_1$) used for the preceding transmission of said packet,

if these two channels are not out, the source terminal retransmits (699) said packet on the direct and relayed channels, using the same transmission resource ($PRB_1$) used for the preceding transmission of said packet.

10. The forwarding method according to claim 1, **characterized in that** the source terminal transmits (710) on the one hand said packet on a direct channel (*s-d*) and on the other hand on a relayed channel (*s-r-d*) to the destination terminal, the relay terminal using a code different from the one used by the source terminal for coding the packet prior to transmission thereof, the destination terminal making a combination of the data received via the direct channel and via the relayed channel.

11. The forwarding method according to claim 10, **characterized in that** said combination is done by concatenating the data received via the direct channel and that received via the relayed channel.

12. The forwarding method according to claim 1, **characterized in that** the source terminal transmits (710) on the one hand said packet on a direct channel (*s-d*) and on the other hand on a relayed channel (*s-r-d*) to the destination terminal, the relay terminal using the same code as the one used by the source terminal for coding the packet prior to transmission thereof, the destination terminal making a combination of the data received via the direct channel and via the relayed channel.

13. The forwarding method according to claim 12, **characterized in that** said combination is done by summation of the soft values of the data received via the direct channel and the soft values of the data received via the relayed channel.

14. The forwarding method according to claim 10, 11, 12, or 13, **characterized in that** the destination terminal performs decoding (730) of said packet using the packet code received from the source terminal, on the one hand, and the packet received from the relay terminal, on the other hand and, in case said packet cannot be decoded without errors, (740) a determination is made (750) whether the composite channel (*sd & rd*) resulting from the combination of the direct channel (*s-d*) and the channel between the relay terminal and the destination terminal (*r-d*) is in an outage state, and

if said composite channel is not out, the source terminal retransmits (755) said packet on the direct and relayed channels, using the same transmission resource ($PRB_1$) used for the preceding transmission of said packet, and the relay terminal forwards said packet on the same transmission resource ($PRB_2$) used for the preceding transmission;

in case of outage of the composite channel, the instantaneous mutual information $( I_{inst}^{rd} )$ on the channel (*r-d*)

between the relay terminal and the destination terminal and that $( I_{inst}^{sd} )$ on the direct channel (*s-d*) are compared (760), and

if the first is greater than the second:

the source terminal retransmits (765) said packet using a transmission resource different ($PRB'_1$) from the one ($PRB_1$) used for the preceding transmission of said packet,

and in the opposite case:

the relay terminal retransmits (775) said packet using a transmission resource ($PRB'_2$) different from the one ($PRB_2$) used for the preceding transmission of said packet.

NLOS

*s*

*d*

*r*

Fig. 1A

*s*

*d*

*r*

Fig. 1B

*s*       *d*

*r*

**Fig. 2A**

*s*       *d*

*r*

**Fig. 2B**

*s*       *d*

*r*

**Fig. 2C**

310

transmission du paquet par $s$ sur $PRB_1$

320

transmission par $r$ sur $PRB_2$
du paquet reçu de $s$

330

décodage du paquet en $d$

340

décodage
sans erreur ?

Y

345

renvoi de $ACK$ à $s$

N

350

$R > I_{inst}^{srd}$

Y

355

coupure de $s - r - d$
renvoi par $d$ de $NACK + OUTAGE$
retransmission par $s$ et $r$ sur
$(PRB'_1, PRB'_2) \neq (PRB_1, PRB_2)$

N

360

pas de coupure de $s - r - d$
renvoi par $d$ de $NACK + NOUTAGE$
retransmission par $s$ et $r$ sur $(PRB_1, PRB_2)$

**Fig. 3**

transmission du paquet par $s$ sur $PRB_1$

410

décodage du paquet par $r$  420

décodage sans erreur en $r$ ?  430

N

Y

transmission du paquet par $r$ à $d$ sur $PRB_2$  440

décodage sans erreur en $d$ ?  450

Y

renvoi de $ACK$ à $s$  455

N

$R > I^{rd}_{inst}$  460

Y

coupure de $r - d$
renvoi par $d$ de $NACK_2 + OUTAGE_2$
retransmission par $r$ sur $PRB'_2$  465

N

pas de coupure de $r - d$
renvoi par $d$ de $NACK_2 + NOUTAGE_2$
retransmission par $r$ sur $PRB_2$  470

$R > I^{sr}_{inst}$  480

Y

coupure de $s - r$
renvoi par $r$ de $NACK_1 + OUTAGE_1$
retransmission par $s$ sur $PRB'_1$  485

N

pas de coupure de $s - r$
renvoi par $r$ de $NACK_1 + NOUTAGE_1$
retransmission par $s$ sur $PRB_1$  490

**Fig. 4**

noeud $\mu \in \Pi_{sd}$
$\Omega_\mu = \{s, r_1, ..., r_{\mu-1}\}$ — 510

transmission du paquet par $s$ sur $PRB_0$

transmissions successives par $r_1, ..., r_{\mu-1}$ sur $PRB_1, ..., PRB_{\mu-1}$ — 520

décodage sans erreur en $\mu$ ? — 530

renvoi de $ACK_\mu$

transmission du paquet par $\mu$ — 535

Y

N

$R > I_{inst}^{\mu-1,\mu}$ — 540

coupure de $r_{\mu-1} - \mu$

renvoi par $\mu$ de $NACK_\mu + OUTAGE_\mu$

retransmission par $r_{\mu-1}$ sur $PRB'_{\mu-1}$ — 545

Y

N

pas de coupure de $r_{\mu-1} - \mu$

renvoi par $\mu$ de $NACK_\mu + NOUTAGE_\mu$

retransmission par $r_{\mu-1}$ sur $PRB_{\mu-1}$ — 550

**Fig. 5**

**Fig. 6**

610 transmission du paquet par $s$ sur $PRB_1$ à $r$ et $d$

620 décodage par $d$ du paquet reçu de $s$

630 décodage sans erreur en $d$ ? — Y → 635 renvoi de $ACK$ à $s$

N

640 décodage sans erreur en $r$ ? — Y

N

650 transmission du paquet par $r$ à $d$ sur $PRB_2$

660 décodage sans erreur en $d$ ? — Y → 665 renvoi de $ACK$ à $s$

N

670 $R > I_{inst}^{rd}$ — Y → 675 coupure de $r-d$ / renvoi par $d$ de $NACK + OUTAGE_2$ / retransmission par $r$ sur $PRB'_2$

N

680 pas de coupure de $r-d$ / renvoi par $d$ de $NACK + NOUTAGE_2$ / retransmission par $r$ sur $PRB_2$

690 $R > I_{inst}^{sd}$ ou $R > I_{inst}^{sr}$ — Y → 695 coupure de $s-r$ et/ou $s-d$ / renvoi par $d$ de $NACK + OUTAGE_1$ / renvoi par $r$ de $NACK + OUTAGE'_1$ / retransmission par $s$ sur $PRB'_1$

N

699 pas de coupure de $s-r$ ni $s-d$ / renvoi par $d$ de $NACK + NOUTAGE_1$ / renvoi par $r$ de $NACK + NOUTAGE'_1$ / retransmission par $s$ sur $PRB_1$

710

transmission du paquet par $s$ sur $PRB_1$ à $r$ et $d$

720

décodage et transmission du paquet par $r$ sur $PRB_2$

730

décodage par $d$ du paquet reçu de $s$ et $r$

740

décodage sans erreur en $d$ ?

Y

745

renvoi de $ACK$ à $s$

N

750

$R > I_{inst}^{sd\&rd}$

N

755

absence de coupure de $s-d$ & $r-d$
renvoi par $d$ de $NACK+NOUTAGE$
retransmission par $s$ sur $PRB_1$ et $r$ sur $PRB_2$

Y

770

coupure de $s-d$ & $r-d$
renvoi par $d$ de $NACK+OUTAGE$
retransmission par $s$ sur $PRB'_1$ et $r$ sur $PRB'_2$

**Fig. 7A**

710

transmission du paquet par $s$ sur $PRB_1$ à $r$ et $d$

720

décodage et transmission du paquet par $r$ sur $PRB_2$

730

décodage par $d$ du paquet reçu de $s$ et $r$

740

décodage sans erreur en $d$ ?

745

renvoi de $ACK$ à $s$

Y

N

750

$R > I_{inst}^{sd\&rd}$

755

absence de coupure de $s-d$ & $r-d$
renvoi par $d$ de $NACK + NOUTAGE$
retransmission par $s$ sur $PRB_1$ et $r$ sur $PRB_2$

N

Y

760

$I_{inst}^{rd} > I_{inst}^{sd}$

coupure de $s-d$
renvoi par $d$ de $NACK + OUTAGE_1$
retransmission par $s$ sur $PRB'_1$

Y

N

765

775

coupure de $r-d$
renvoi par $d$ de $NACK + OUTAGE_2$
retransmission par $r$ sur $PRB'_2$

**Fig. 7B**

31

**Fig. 8**

- 810: transmission du paquet par $s$ sur $PRB_1$ à $r$ et $d$ sur canal direct et transmission sur canal relayé $s - r_1 - ..r_M - d$
- 820: décodage par noeud $\mu$, $\mu \neq s$
- 830: décodage sans erreur en $\mu$ ?
- 835: renvoi de $ACK$ à $s$
- 840: renvoi de $NACK$ à $s$
- 850: $R > I_{inst}^{v\mu}$
- 855: absence de coupure de $v$-$\mu$ renvoi par $\mu$ de $NOUTAGE_{v\mu}$ retransmission par $v$ sur $PRB_v$
- 860: coupure de $v$-$\mu$ renvoi par $\mu$ de $OUTAGE_{v\mu}$ retransmission par $v$ sur $PRB'_v$

32

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008024158 A

- WO 2008153308 A1

**Littérature non-brevet citée dans la description**

- **J.N LANEMAN ; G.W. WORNELL.** Exploiting distributed spatial diversity in wireless networks. *Proc. Allerton Conf. on Comm., Contr. and Computing.,* Octobre 2000
- **B. ZHAO et al.** A Generalization of Hybrid-ARQ. *IEEE Journal on Selected Areas in Comm.,* Janvier 2005, vol. 23 (1), 7-18

- **E. BIGLIERI et al.** Fading channels : information-theoretic and communication aspects. *IEEE Trans. on Information Theory,* Octobre 1998, vol. 44 (6), 2619-2692